# EUROPEAN PATENT APPLICATION

(11) **EP 4 439 763 A1**
(43) Date of publication of application: **02.10.2024**
(21) Application number: 23773461.1
(22) Date of filing: 03.02.2023
(51) Int. Cl.: H01M 10/0525, H01M 4/13, H01M 10/0587, H01M 50/586

(54) **ELECTRODE CORE, BATTERY APPARATUS AND ELECTRONIC DEVICE**

(30) Priority: 25.03.2022 CN 202220680683 U
(71) Applicant: BYD Company Limited, Shenzhen, Guangdong 518118 (CN)
(72) Inventor: ZHONG, Denghai, Shenzhen, Guangdong 518118 (CN); LEI, Yudong, Shenzhen, Guangdong 518118 (CN); GUO, Dianda, Shenzhen, Guangdong 518118 (CN); LONG, Jianwen, Shenzhen, Guangdong 518118 (CN); FAN, Guokang, Shenzhen, Guangdong 518118 (CN)
(74) Representative: Dehns Germany Partnerschaft mbB
(86) International application number: PCT/CN2023/074330
(87) International publication number: WO 2023/179210

(57) **Abstract**

An electrode core, a battery apparatus, and an electronic device are provided. The electrode core includes a negative electrode sheet, a negative electrode tab, and a positive electrode sheet. The negative electrode sheet includes a negative electrode current collector and a negative electrode active material attached to the negative electrode current collector. A negative electrode tab groove is provided on the negative electrode active material. The negative electrode tab is arranged in the negative electrode tab groove. The positive electrode sheet includes a positive electrode current collector, and a positive electrode active material attached to the positive electrode current collector. A first groove arranged opposite to the negative electrode tab groove is provided on the positive electrode active material, and a projection of the first groove on the negative electrode sheet is located in the negative electrode tab groove.

## Description

### CROSS-REFERENCE TO RELATED APPLICATIONS

The present disclosure claims priority to and benefits of Chinese Patent Application No. 202220680683.X, filed on March 25, 2022, and entitled "ELECTRODE CORE, BATTERY APPARATUS, AND ELECTRONIC DEVICE". The entire content of the above-referenced application is incorporated herein by reference.

### FIELD

The present disclosure relates to the field of power supply apparatus technologies, and specifically, to an electrode core, a battery apparatus, and an electronic device.

### BACKGROUND

The lithium-ion battery is a secondary battery with characteristics such as high energy density, large specific power, good cycle performance, no memory effect, and no pollution, and has been widely used in the fields such as mobile phones, mobile notebook computers, hybrid vehicles, electric vehicles, and solar power generation systems. The lithium-ion battery usually includes parts such as an electrode core and a battery housing. The electrode core is arranged inside the battery housing. The electrode core includes a positive electrode sheet, a negative electrode sheet, and a separator. The separator is located between the positive electrode sheet and the negative electrode sheet.

The positive and negative electrode sheets usually either include an electrode tab, a current collector, and a coating attached to the current collector. A part of the current collector to which the coating is not attached forms a blank foil region. The electrode tab is welded to the blank foil region. The current collector exposed in the blank foil region usually has burrs. The burrs pierce the separator and come into contact with the coating of the other electrode sheet, which is prone to cause a short-circuit in the battery.

Particularly, a consequence caused by a short-circuit between a positive electrode current collector or a positive electrode tab and a fully-charged negative electrode active material is the most severe. In this case, the lithium-ion battery releases a largest amount of heat in a short period of time, which is most prone to cause an explosion.

Therefore, it is necessary to provide a novel technical solution, to resolve the foregoing problems.

### SUMMARY

An objective of the present disclosure is to provide a novel technical solution of an electrode core.

According to an aspect of the present disclosure, an electrode core is provided. The electrode core includes a negative electrode sheet, a negative electrode tab, and a positive electrode sheet. The negative electrode sheet includes a negative electrode current collector and a negative electrode active material attached to the negative electrode current collector. A negative electrode tab groove is provided on the negative electrode active material. The negative electrode tab is arranged in the negative electrode tab groove. The positive electrode sheet includes a positive electrode current collector and a positive electrode active material attached to the positive electrode current collector. A first groove is provided on the positive electrode active material. The first groove is arranged opposite to the negative electrode tab groove. In addition, a projection of the first groove on the negative electrode sheet is located in the negative electrode tab groove.

In an embodiment, the electrode core further includes a separator. The separator is located between the positive electrode sheet and the negative electrode sheet.

In an embodiment, a second groove is further provided on the negative electrode active material. The second groove and the negative electrode tab groove are symmetrically arranged on two sides of the negative electrode current collector. A third groove is provided on the positive electrode active material. The third groove is arranged opposite to the second groove. In addition, a projection of the third groove on the negative electrode sheet is located in the second groove.

In an embodiment, the electrode core further includes: a first insulation adhesive layer, bonded to a bottom of the negative electrode tab groove and extending to the negative electrode active material on a side portion of the negative electrode tab groove, or bonded to an upper surface of the negative electrode tab and extending to the negative electrode active material on a side portion of the negative electrode tab groove; a second insulation adhesive layer, bonded to a bottom of the first groove and extending to the positive electrode active material on a side portion of the first groove; a third insulation adhesive layer, bonded to a bottom of the second groove and extending to the negative electrode active material on a side portion of the second groove; and a fourth insulation adhesive layer, bonded to a bottom of the third groove and extending to the positive electrode active material on a side portion of the third groove.

In an embodiment, the first groove is a through groove, including a first left wall and a first right wall. The second insulation adhesive layer includes a second left insulation adhesive layer arranged on the first left wall and a second right insulation adhesive layer arranged on the first right wall. The second left insulation adhesive layer and the second right insulation adhesive layer overlap at opposite positions at the bottom of the first groove. Alternatively, the second left insulation adhesive layer and the second right insulation adhesive layer are spaced apart at opposite positions at the bottom of the first groove. Additionally/Alternatively, the third groove is a through groove, including a third left wall and a third right wall, and the fourth insulation adhesive layer includes a fourth left insulation adhesive layer arranged on the third left wall and a fourth right insulation adhesive layer arranged on the third right wall. The fourth left insulation adhesive layer and the fourth right insulation adhesive layer overlap at opposite positions at the bottom of the third groove. Alternatively, the fourth left insulation adhesive layer and the fourth right insulation adhesive layer are spaced apart at opposite positions at the bottom of the third groove.

In an embodiment, the electrode core further includes a positive electrode tab. A positive electrode tab groove is provided on the positive electrode active material. The positive electrode tab is arranged in the positive electrode tab groove. A fourth groove is provided on the negative electrode active material. The fourth groove is arranged opposite to the positive electrode tab groove. In addition, a projection of the positive electrode tab groove on the negative electrode sheet is located in the fourth groove.

In an embodiment, a fifth groove is further provided on the positive electrode active material. The fifth groove and the positive electrode tab groove are symmetrically arranged on two sides of the positive electrode current collector. In addition, a sixth groove is provided on the negative electrode active material. The sixth groove is arranged opposite to the fifth groove. In addition, a projection of the fifth groove on the negative electrode sheet is located in the sixth groove.

In an embodiment, the electrode core further includes a fifth insulation adhesive layer, a sixth insulation adhesive layer, a seventh insulation adhesive layer, and an eighth insulation adhesive layer. The fifth insulation adhesive layer is bonded to a bottom of the positive electrode tab groove and extends to the positive electrode active material on a side portion of the positive electrode tab groove. Alternatively, the fifth insulation adhesive layer is bonded to an upper surface of the positive electrode tab and extends to the positive electrode active material on a side portion of the positive electrode tab groove. The sixth insulation adhesive layer is bonded to a bottom of the fourth groove and extends to the negative electrode active material on a side portion of the fourth groove. The seventh insulation adhesive layer is bonded to a bottom of the fifth groove and extends to the positive electrode active material on a side portion of the fifth groove. The eighth insulation adhesive layer is bonded to a bottom of the sixth groove and extends to the negative electrode active material on a side portion of the sixth groove.

In an embodiment, the fourth groove is a through groove, including a fourth left wall and a fourth right wall. The sixth insulation adhesive layer includes a sixth left insulation adhesive layer arranged on the fourth left wall and a sixth right insulation adhesive layer arranged on the fourth right wall. The sixth left insulation adhesive layer and the sixth right insulation adhesive layer overlap at opposite positions at the bottom of the fourth groove. Alternatively, the sixth left insulation adhesive layer and the sixth right insulation adhesive layer are spaced apart at opposite positions at the bottom of the fourth groove. Additionally/Alternatively, the sixth groove is a through groove, including a sixth left wall and a sixth right wall. The eighth insulation adhesive layer includes an eighth left insulation adhesive layer arranged on the sixth left wall and an eighth right insulation adhesive layer arranged on the sixth right wall. The eighth left insulation adhesive layer and the eighth right insulation adhesive layer overlap at opposite positions at the bottom of the sixth groove. Alternatively, the eighth left insulation adhesive layer and the eighth right insulation adhesive layer are spaced apart at opposite positions at the bottom of the sixth groove.

In an embodiment, central axes of the negative electrode tab groove, the first groove, the second groove, and the third groove are collinear.

In an embodiment, central axes of the positive electrode tab groove, the fourth groove, the fifth groove, and the sixth groove are collinear.

According to a second aspect of the present disclosure, an electrode core is provided. The electrode core includes a positive electrode sheet, a positive electrode tab, and a negative electrode sheet. The positive electrode sheet includes a positive electrode current collector and a positive electrode active material attached to the positive electrode current collector. A positive electrode tab groove is provided on the positive electrode active material. The positive electrode tab is arranged in the positive electrode tab groove. The negative electrode sheet includes a negative electrode current collector and a negative electrode active material attached to the negative electrode current collector. A fourth groove is provided on the negative electrode active material. The fourth groove is arranged opposite to the positive electrode tab groove. In addition, a projection of the positive electrode tab groove on the negative electrode sheet is located in the fourth groove.

In an embodiment, a fifth groove is further provided on the positive electrode active material. The fifth groove and the positive electrode tab groove are symmetrically arranged on two sides of the positive electrode current collector. A sixth groove is provided on the negative electrode active material. The sixth groove is arranged opposite to the fifth groove. In addition, a projection of the fifth groove on the negative electrode sheet is located in the sixth groove.

In an embodiment, the electrode core further includes: a fifth insulation adhesive layer, bonded to a bottom of the positive electrode tab groove and extending to the positive electrode active material on a side portion of the positive electrode tab groove, or bonded to an upper surface of the positive electrode tab and extending to the positive electrode active material on a side portion of the positive electrode tab groove; a sixth insulation adhesive layer, bonded to a bottom of the fourth groove and extending to the negative electrode active material on a side portion of the fourth groove; a seventh insulation adhesive layer, bonded to a bottom of the fifth groove and extending to the positive electrode active material on a side portion of the fifth groove; and an eighth insulation adhesive layer, bonded to a bottom of the sixth groove and extending to the negative electrode active material on a side portion of the sixth groove.

In an embodiment, the fourth groove is a through groove, including a fourth left wall and a fourth right wall. The sixth insulation adhesive layer includes a sixth left insulation adhesive layer arranged on the fourth left wall and a sixth right insulation adhesive layer arranged on the fourth right wall. The sixth left insulation adhesive layer and the sixth right insulation adhesive layer overlap at opposite positions at the bottom of the fourth groove. Alternatively, the sixth left insulation adhesive layer and the sixth right insulation adhesive layer are spaced apart at opposite positions at the bottom of the fourth groove. Additionally/Alternatively, the sixth groove is a through groove, including a sixth left wall and a sixth right wall. The eighth insulation adhesive layer includes an eighth left insulation adhesive layer arranged on the sixth left wall and an eighth right insulation adhesive layer arranged on the sixth right wall. The eighth left insulation adhesive layer and the eighth right insulation adhesive layer overlap at opposite positions at the bottom of the sixth groove. Alternatively, the eighth left insulation adhesive layer and the eighth right insulation adhesive layer are spaced apart at opposite positions at the bottom of the sixth groove.

According to a third aspect of the present disclosure, an electrode core is provided. The electrode core includes: a positive electrode sheet, including a positive electrode current collector and a positive electrode active material attached to the positive electrode current collector, at least one first recessed region to which the positive electrode active material is not attached being provided on the positive electrode current collector, a positive electrode tab being arranged in the at least one first recessed region; a negative electrode sheet, including a negative electrode current collector and a negative electrode active material attached to the negative electrode current collector, at least one second recessed region to which the negative electrode active material is not attached being provided on the negative electrode current collector, no negative electrode tab being arranged in the second recessed region, and the second recessed region being arranged opposite to the first recessed region; and a separator, located between the positive electrode sheet and the negative electrode sheet.

In an embodiment, a projection of the first recessed region on the negative electrode sheet is located in a range of the second recessed region. An area of the second recessed region is larger than an area of the first recessed region. A region of the first recessed region in which burrs can be generated is located in the range of the second recessed region.

In an embodiment, the first recessed regions are symmetrically arranged with respect to the positive electrode current collector. The positive electrode tab is arranged in one of the first recessed regions.

In an embodiment, a first insulation material adhesive layer is further included, the at least one first recessed region being attached to by the first insulation material adhesive layer; and/or
a second insulation material adhesive layer is further included, the at least one second recessed region being attached to by the second insulation material adhesive layer

In an embodiment, a bottom portion of a positive electrode groove on the positive electrode sheet is the first recessed region, the first insulation material adhesive layer being fixed to the first recessed region and extending to a side portion of the positive electrode groove; and/or
a bottom portion of a negative electrode groove on the negative electrode sheet is the second recessed region, the second insulation material adhesive layer being fixed to the second recessed region and extending to a side portion of the negative electrode groove.

In an embodiment, the first insulation material adhesive layer covers the first recessed region; and/or
the second insulation material adhesive layer covers the second recessed region.

In an embodiment, the side portion of the positive electrode groove includes multiple surfaces, the first insulation material adhesive layer being arranged on each of the surfaces, and the first insulation material adhesive layers on different surfaces being arranged independently; and/or
the side portion of the negative electrode groove includes multiple surfaces, the second insulation material adhesive layer being arranged on each of the surfaces, and the second insulation material adhesive layers on different surfaces being arranged independently.

In an embodiment, parts of the multiple first insulation material adhesive layers located in the first recessed region are arranged in an overlapping manner; and/or
parts of the multiple second insulation material adhesive layers located in the second recessed region are arranged in an overlapping manner.

In an embodiment, parts of the multiple first insulation material adhesive layers located in the first recessed region form a sub-blank region through enclosure; and/or
parts of the multiple second insulation material adhesive layers located in the second recessed region form a sub-blank region through enclosure.

In an embodiment, at least one of the first insulation material adhesive layer and the second insulation material adhesive layer is a single-sided tape, a high-temperature adhesive, or an insulation film; or
at least one of the first insulation material adhesive layer and the second insulation material adhesive layer is a double-sided tape or a hot melt adhesive. At least one of the first insulation material adhesive layer and the second insulation material adhesive layer includes a first adhesive surface and a second adhesive surface that have different adhesion strength. The first adhesive surface is bonded to the separator. Adhesion strength of the first adhesive surface is greater than adhesion strength of the second adhesive surface.

In an embodiment, the first recessed region runs through the positive electrode sheet in a width direction; or
the positive electrode active material is provided with a notch on a side of the positive electrode sheet in a width direction, and the notch forms the first recessed region.

In an embodiment, the second recessed region runs through the negative electrode sheet in the width direction; or
the negative electrode active material is provided with a notch on a side of the negative electrode sheet in the width direction, and the notch forms the second recessed region.

According to a fourth aspect of the present disclosure, an electrode core is provided. The electrode core includes: a first electrode sheet, including a current collector and an active material attached to a surface of the current collector, a groove being provided on a surface of the active material, and the groove including a bottom portion and a first sidewall portion and a second sidewall portion that are arranged opposite to each other, the active material being not attached to the bottom portion of the groove; a first insulation adhesive, bonded to the bottom portion and extending to the active material on the first sidewall portion; and a second insulation adhesive, bonded to the bottom portion and extending to the active material on the second sidewall portion.

In an embodiment, the first insulation adhesive extends from the first sidewall portion to a surface of the active material.

The second insulation adhesive extends from the second sidewall portion to the surface of the active material.

In an embodiment, parts of the first insulation adhesive and the second insulation adhesive located at the bottom portion are arranged in an overlapping manner.

In an embodiment, parts of the first insulation adhesive and the second insulation adhesive located at the bottom portion are spaced apart.

In an embodiment, an electrode tab is arranged at the bottom portion, and the electrode tab is located in a region in which the first insulation adhesive and the second insulation adhesive are spaced apart.

In an embodiment, a length of a part of the first insulation adhesive extending to the surface of the active material is greater than or equal to 0.5 mm.

A length of a part of the second insulation adhesive extending to the surface of the active material is greater than or equal to 0.5 mm.

In an embodiment, the groove is an open groove facing a side of the current collector in a width direction, and further includes a third sidewall portion connected between the first sidewall portion and the second sidewall portion. The third sidewall portion is opposite to an opening of the open groove.

The electrode core further includes a third insulation adhesive. The third insulation adhesive is bonded to the bottom portion and extends to the active material on the third sidewall portion.

In an embodiment, at least one of the first insulation adhesive and the second insulation adhesive is a single-sided tape, a high-temperature adhesive, an insulation film, a double-sided tape, or a hot melt adhesive.

In an embodiment, a second electrode sheet and a separator are further included. The separator is located between the first electrode sheet and the second electrode sheet. An electrode tab groove is provided on the second electrode sheet, and an electrode tab is arranged in the electrode tab groove. The electrode core further includes a third insulation adhesive covering the electrode tab groove. The groove is arranged opposite to the electrode tab groove.

According to a fifth aspect of the present disclosure, a battery apparatus is provided. The battery apparatus includes the foregoing electrode core.

In an embodiment, the battery apparatus further includes a housing, the electrode core being accommodated inside the housing.

According to a sixth aspect of the present disclosure, an electronic device is provided. The electronic device includes the foregoing battery apparatus.

In the embodiments of the present disclosure, the projection of the first groove provided on the positive electrode active material on the negative electrode sheet is located in the negative electrode tab groove, so that even if burrs, dendrites, and the like on the negative electrode tab groove and the first groove pierce the separator and arrive at the other side of the separator, a probability that the burrs, the dendrites, and the like come into contact with the negative electrode active material on the negative electrode sheet is small. Through such an arrangement manner, a risk that the electrode core violently generates heat or even explodes is significantly reduced. Use safety of the electrode core is significantly improved.

Other features and advantages of the present disclosure will become apparent from the following detailed description of exemplary embodiments of the present disclosure with reference to the drawings.

### BRIEF DESCRIPTION OF THE DRAWINGS

The accompanying drawings, which constitute a part of this specification, illustrate embodiments of the present disclosure and are used for describing a principle of the present disclosure together with this specification.
FIG. 1 is a schematic structural diagram of an electrode core according to an embodiment of a first solution of the present disclosure;
FIG. 2 is a top view of a positive electrode sheet according to an embodiment of the first solution of the present disclosure;
FIG. 3 is a side view of a positive electrode sheet according to an embodiment of the first solution of the present disclosure;
FIG. 4 is a top view of a negative electrode sheet according to an embodiment of the first solution of the present disclosure;
FIG. 5 is a side view of a negative electrode sheet according to an embodiment of the first solution of the present disclosure;
FIG. 6 is a schematic structural diagram of an electrode core according to an embodiment of a second solution of the present disclosure;
FIG. 7 is a top view of a positive electrode sheet according to an embodiment of the second solution of the present disclosure;
FIG. 8 is a side view of a positive electrode sheet according to an embodiment of the second solution of the present disclosure;
FIG. 9 is a bottom view of a positive electrode sheet according to an embodiment of the second solution of the present disclosure;
FIG. 10 is a top view of a negative electrode sheet according to an embodiment of the second solution of the present disclosure;
FIG. 11 is a side view of a negative electrode sheet according to an embodiment of the second solution of the present disclosure;
FIG. 12 is a bottom view of a negative electrode sheet according to an embodiment of the second solution of the present disclosure;
FIG. 13 is a partial view of an electrode core according to a second embodiment of the second solution of the present disclosure;
FIG. 14 is a schematic structural diagram of an electrode core according to an embodiment of a third solution of the present disclosure;
FIG. 15 is a top view of a positive electrode sheet according to an embodiment of the third solution of the present disclosure;
FIG. 16 is a schematic structural diagram of a second type of electrode core according to an embodiment of the third solution of the present disclosure;
FIG. 17 is a side view of a positive electrode sheet according to an embodiment of the third solution of the present disclosure;
FIG. 18 is a schematic structural diagram of a third type of electrode core according to an embodiment of the third solution of the present disclosure;
FIG. 19 is a schematic structural diagram of a fourth type of electrode core according to an embodiment of the third solution of the present disclosure; and
FIG. 20 is a schematic structural diagram of a fifth type of electrode core according to an embodiment of the third solution of the present disclosure.

Reference signs of the first solution:
11. positive electrode sheet; 12. negative electrode sheet; 101. positive electrode current collector; 102. negative electrode current collector; 103. positive electrode tab; 104. negative electrode tab; 105. positive electrode active material; 106. negative electrode active material; 107. separator; 111. negative electrode tab groove; 112. first groove; 113. second groove; 114. third groove; 115. positive electrode tab groove; 116. fourth groove; 117. fifth groove; 118. sixth groove; 121. first insulation adhesive layer; 122. second insulation adhesive layer; 123. third insulation adhesive layer; 124. fourth insulation adhesive layer; 1241. fourth left insulation adhesive layer; 1242. fourth right insulation adhesive layer; 125. fifth insulation adhesive layer; 126. sixth insulation adhesive layer; 127. seventh insulation adhesive layer; 128. eighth insulation adhesive layer

Reference signs of the second solution:
A11. positive electrode sheet; A12. negative electrode sheet; A101. positive electrode current collector; A102. negative electrode current collector; A103. positive electrode tab; A104. negative electrode tab; A105. positive electrode active material; A106. negative electrode active material; A107. separator; A111. first recessed region (equivalent to a bottom portion of the positive electrode tab groove 115 and a bottom portion of the fifth groove 117 in the first solution); A112. third recessed region (equivalent to a bottom portion of the negative electrode tab groove 111 and a bottom portion of the second groove 113 in the first solution); A113. second recessed region (equivalent to a bottom portion of the fourth groove 116 and a bottom portion of the sixth groove 118 in the first solution); A121. first insulation material adhesive layer (equivalent to the fifth insulation adhesive layer 125 and the seventh insulation adhesive layer 127 in the first solution); A122. third insulation material adhesive layer (equivalent to the first insulation adhesive layer 121 and the third insulation adhesive layer 123 in the first solution); A123. second insulation material adhesive layer (equivalent to the sixth insulation adhesive layer 126 and the eighth insulation adhesive layer 128 in first solution).

Reference signs of the third solution:
B11. positive electrode sheet; B12. negative electrode sheet; B101. positive electrode current collector; B102. negative electrode current collector; B103. positive electrode tab; B104. negative electrode tab; B105. positive electrode active material; B106. negative electrode active material; B107. separator; B111. first avoidance groove (equivalent to the positive electrode tab groove 115 and the fifth groove 117 in the first solution); B112. second avoidance groove (equivalent to the negative electrode tab groove 111 and the second groove 113 in the first solution); B112a. negative electrode tab groove; B113. third avoidance groove (equivalent to the fourth groove 116 and the sixth groove 118 in the first solution); B114. fourth avoidance groove (equivalent to the first groove 112 and the third groove 114 in the first solution); B121. adhesive tape; B122. adhesive tape; B122a. third insulation adhesive (equivalent to the first insulation adhesive layer 121 in the first solution); B123. adhesive tape; B124a. first insulation adhesive (equivalent to the fourth left insulation adhesive layer 1241 in the first solution); B124b. second insulation adhesive (equivalent to the fourth left insulation adhesive layer 1242 in the first solution).

### DETAILED DESCRIPTION

Various exemplary embodiments of the present disclosure are described herein in detail with reference to the accompanying drawings. It should be noted that unless otherwise specified, the relative deployment, the numerical expression, and values of the components and steps described in the embodiments do not limit the scope of the present disclosure.

In fact, the following descriptions of at least one exemplary embodiment are merely illustrative, and in no way constitute any limitation on the present disclosure and application or use of the present disclosure.

Technologies and devices known to a person of ordinary skill in the art may not be discussed in detail, but in proper circumstances, the technologies and devices shall be regarded as a part of this specification.

In all examples that are shown and discussed herein, any specific value should be interpreted only as an example and not as a constraint. Therefore, other examples of the exemplary embodiments may have different values.

It should be noted that: similar reference signs or letters in the accompanying drawings indicate similar items. Therefore, once an item is defined in one accompanying drawing, the item does not need to be further discussed in the subsequent accompanying drawings.

### <First solution>

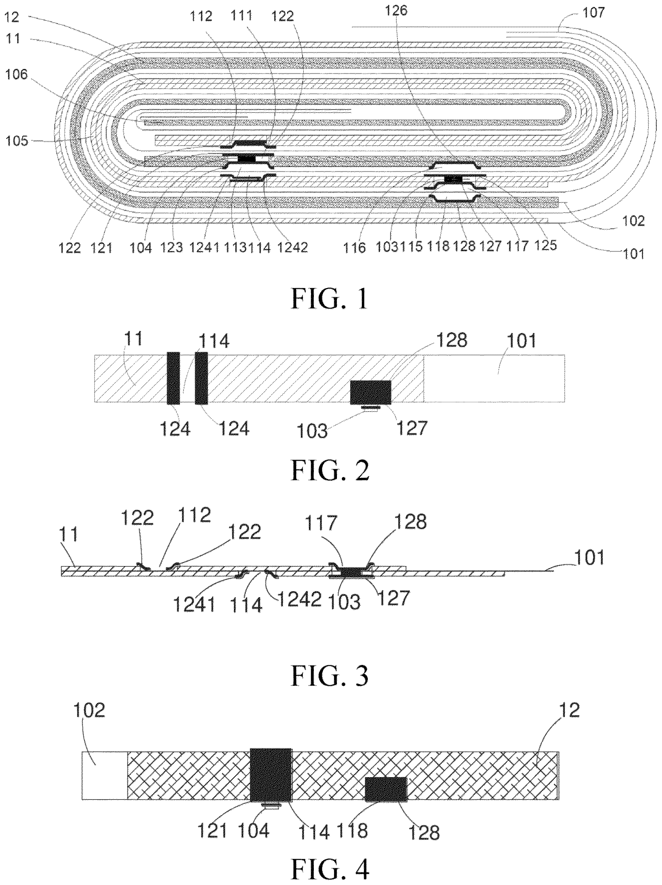

According to an embodiment of the present disclosure, an electrode core is provided. As shown in FIG. 1, the electrode core includes a negative electrode sheet 12, a negative electrode tab 104, and a positive electrode sheet 11. The negative electrode sheet 12 includes a negative electrode current collector 102 and a negative electrode active material 106 attached to the negative electrode current collector 102. A negative electrode tab groove 111 is provided on the negative electrode active material 106. The negative electrode tab 104 is arranged in the negative electrode tab groove 111. The positive electrode sheet 11 includes a positive electrode current collector 101 and a positive electrode active material 105 attached to the positive electrode current collector 101. A first groove 112 is provided on the positive electrode active material 105. The first groove 112 is arranged opposite to the negative electrode tab groove 111. In addition, a projection of the first groove 112 on the negative electrode sheet 12 is located in the negative electrode tab groove 111.

The electrode core further includes a separator 107. The separator 107 is located between the positive electrode sheet 11 and the negative electrode sheet 12.

It should be noted that the electrode core is a winding structure or a laminated structure. The electrode core includes a negative electrode sheet 12 and a positive electrode sheet 11.

The negative electrode sheet 12 includes a negative electrode current collector 102 and a negative electrode active material 106 attached to the negative electrode current collector 102. The negative electrode current collector 102 may be copper foil, or certainly, may be another proper material, which is not limited herein. A person skilled in the art can make a selection according to actual needs.

The negative electrode active material 106 may be a graphite material, or certainly, may be another proper material, which is not limited herein. A person skilled in the art can make a selection according to actual needs.

A negative electrode tab groove 111 is provided on the negative electrode active material 106. In addition, a negative electrode tab 104 is arranged in the negative electrode tab groove 111. The negative electrode tab 104 is arranged in the negative electrode tab groove 111 in a welding manner, or certainly, in another proper connecting manner, which is not limited herein. A person skilled in the art can make a selection according to actual needs.

The positive electrode sheet 11 includes a positive electrode current collector 101 and a positive electrode active material 105 attached to the positive electrode current collector 101. The positive electrode current collector 101 may be aluminum foil, or certainly, may be another proper material, which is not limited herein. A person skilled in the art can make a selection according to actual needs.

The positive electrode active material 105 may be a lithium cobalt oxide material, or certainly, may be another proper material, which is not limited herein. A person skilled in the art can make a selection according to actual needs.

A first groove 112 is provided on the positive electrode active material 105. The first groove 112 is arranged opposite to the negative electrode tab groove 111. In addition, a projection of the first groove 112 on the negative electrode sheet 12 is located in the negative electrode tab groove 111.

Using a lithium-ion battery as an example, during charging and discharging, lithium ions are intercalated and deintercalated back and forth between the positive electrode sheet and the negative electrode sheet 12. During charging, lithium ions are deintercalated from the positive electrode active material 105 of the positive electrode sheet 11, and intercalated into the negative electrode active material 106 of the negative electrode sheet 12 through an electrolyte and the separator 107. In this case, the negative electrode sheet 12 is in a lithium-rich state. Reversely, during discharging, lithium ions located in the negative electrode active material 106 are deintercalated from the negative electrode sheet 12, and intercalated into the positive electrode active material 105 of the positive electrode sheet 11 through the electrolyte and the separator 107, so that a potential difference is formed between the positive electrode sheet and the negative electrode sheet 12.

During machining, burrs are likely to be formed on an edge of the negative electrode tab groove 111 and/or an edge of the first groove 112. If the burrs come into contact with the negative electrode active material 106 after piercing the separator 107, the electrode core violently generates heat or even explodes.

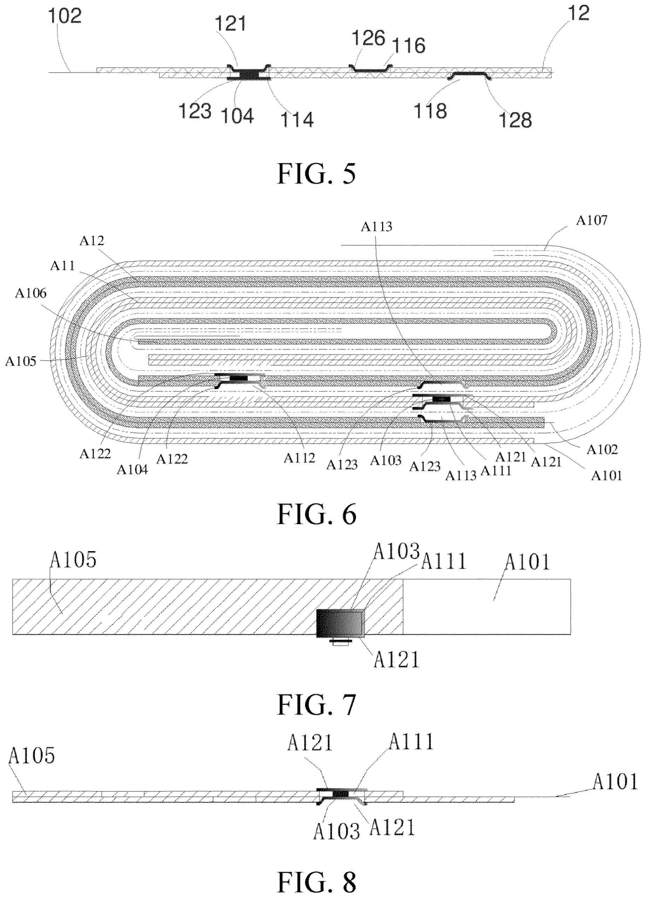

In an embodiment of the present disclosure, as shown in FIG. 4 and FIG. 5, the first groove 112 provided on the positive electrode active material 105 is arranged opposite to a position of the negative electrode tab groove 111 provided on the negative electrode active material 106. In addition, a projection of the first groove 112 on the negative electrode sheet 12 is located in the negative electrode tab groove 111.

It should be noted that, that a projection of the first groove 112 on the negative electrode sheet 12 is located in the negative electrode tab groove 104 means that the negative electrode tab groove 111 can completely include the first groove 112, and a size of the negative electrode tab groove 111 needs to be larger than a size of the first groove 112.

After substances, such as burrs and dendrites, on the negative electrode tab groove 111 and the first groove 112 pierce the separator 107, because the negative electrode tab groove 111 has a size larger than that of the first groove 112 and can completely include the first groove 112, even if the substances, such as burrs and dendrites, pierce the separator 107, and arrive at the other side of the separator 107, a probability that the substances come into contact with the negative electrode active material 106 on the negative electrode sheet 12 is small. Through such an arrangement manner, a risk that the electrode core violently generates heat or even explodes is significantly reduced. Use safety of the electrode core is significantly improved.

Although the phenomenon that the burrs and/or dendrites come into contact with the negative electrode tab groove 111 may occur, an amount of heat generated by such contact is very small, and therefore, the safety hazard of the electrode core is small.

The first groove 112 provided on the positive electrode sheet 11 and the negative electrode tab groove 111 provided on the negative electrode sheet 12 may be formed by laser cleaning, intermittent coating, or stripping, which, certainly, is not limited herein. A person skilled in the art can choose a grooving manner according to actual needs.

In an example, a second groove 113 is further provided on the negative electrode active material 106. The second groove 113 and the negative electrode tab groove 111 are symmetrically arranged on two sides of the negative electrode current collector 102.

A third groove 114 is provided on the positive electrode active material 105. The third groove 114 is arranged opposite to the second groove 113. In addition, a projection of the third groove 114 on the negative electrode sheet 12 is located in the second groove 113.

For example, the negative electrode sheet 12 includes a negative electrode current collector 102 and a negative electrode active substance attached to the negative electrode current collector 102. The negative electrode active material 106 is attached to both sides of the negative electrode current collector 102. A negative electrode tab groove 111 is provided on a first side of the negative electrode current collector 102 and is configured to mount the negative electrode tab 104. A second groove 113 is provided on a second side of the negative electrode current collector 102. The second groove 113 and the negative electrode tab groove 111 are symmetrically arranged on two sides of the negative electrode current collector 102. In this way, the negative electrode active material 106 is cleared on the two sides of the negative electrode current collector 102 in equal amounts, so that the second groove 113 and the negative electrode tab groove 111 that are formed respectively can be smoother, which avoids generation of more burrs, and simplifies the procedure and process. In addition, it is also ensured that there is still a sufficient amount of negative electrode active material 106 on the negative electrode sheet 12, so that there is enough active material in the electrode core for reaction, which ensures the energy density of a battery subsequently formed by winding the electrode core.

A third groove 114 is provided on the positive electrode active material 105. The third groove 114 is arranged opposite to the second groove 113. In addition, a projection of the third groove 114 on the negative electrode sheet 12 is located in the second groove 113.

The third groove 114 provided on the positive electrode active material 105 is arranged opposite to the second groove 113 provided on the negative electrode active material 106. In addition, a projection of the third groove 114 on the negative electrode sheet 12 is located in the second groove 113.

It should be noted that, that a projection of the third groove 114 on the negative electrode sheet 12 is located in the second groove 113 means that the second groove 113 can completely include the third groove 114, and a size of the second groove 113 needs to be larger than a size of the third groove 114.

After substances, such as burrs and dendrites, on the second groove 113 and the third groove 114 pierce the separator 107, because the second groove 113 has a size larger than that of the third groove 114 and can completely include the third groove 114, even if the substances, such as burrs and dendrites, pierce the separator 107, and arrive at the other side of the separator 107, a probability that the substances come into contact with the negative electrode active material 106 on the negative electrode sheet 12 is small. Through such an arrangement manner, a risk that the electrode core violently generates heat or even explodes is significantly reduced. Use safety of the electrode core is significantly improved.

Although the phenomenon that the burrs and/or dendrites come into contact with the negative electrode tab groove 111 may occur, an amount of heat generated by such contact is very small, and therefore, the safety hazard of the electrode core is small.

In an example, the electrode core further includes a first insulation adhesive layer 121, a second insulation adhesive layer 122, a third insulation adhesive layer 123, and a fourth insulation adhesive layer 124. The first insulation adhesive layer 121 is bonded to a bottom of the negative electrode tab groove 111, and extends to the negative electrode active material 106 on a side portion of the negative electrode tab groove 111. The negative electrode tab groove includes a negative electrode tab groove left wall and a negative electrode tab groove right wall. The first insulation adhesive layer 121 includes a first left insulation adhesive layer arranged on the negative electrode tab groove left wall and a first right insulation adhesive layer arranged on the negative electrode tab groove right wall. The first left insulation adhesive layer and the first right insulation adhesive layer are spaced apart at opposite positions at the bottom of the negative electrode tab groove. The negative electrode tab is arranged between the first left insulation adhesive layer and the first right insulation adhesive layer. Alternatively, the first insulation adhesive layer 121 is bonded to an upper surface of the negative electrode tab and extends to the negative electrode active material 106 on a side portion of the negative electrode tab groove.

The second insulation adhesive layer 122 is bonded to a bottom of the first groove 112 and extends to the positive electrode active material 105 on a side portion of the first groove 112. The third insulation adhesive layer 123 is bonded to a bottom of the second groove 113 and extends to the negative electrode active material 106 on a side portion of the second groove 113. The fourth insulation adhesive layer 124 is bonded to a bottom of the third groove 114 and extends to the positive electrode active material 105 on a side portion of the third groove 114.

In this example, the insulation adhesive layers are arranged on the negative electrode tab groove 111, the first groove 112, the second groove 113, and the third groove 114 respectively, and the insulation adhesive layers completely cover the grooves and extend to the active material on the side portions of the grooves. Because neither the positive electrode current collector 101 nor the negative electrode current collector 102 is a porous material, even if the electrolyte from a porous active material (for example, the positive electrode active material 105 or the negative electrode active material 106) infiltrates the insulation adhesive layers covering the active material and weakens or eliminates the adhesiveness of the insulation adhesive layers covering the active material, because parts of the insulation adhesive layers still covering the grooves (for example, the negative electrode tab groove 111, the first groove 112, the second groove 113, and the third groove 114) are tightly combined with the corresponding current collectors (for example, the positive electrode current collector 101 and the negative electrode current collector 102), the electrolyte cannot infiltrate the insulation adhesive layers. Free radicals of the electrolyte cannot infiltrate the insulation adhesive layers. The insulation adhesive layers located on the grooves (for example, the negative electrode tab groove 111, the first groove 112, the second groove 113, and the third groove 114) can still maintain good adhesiveness.

In addition, insulation adhesive layers covering the grooves (for example, the negative electrode tab groove 111, the first groove 112, the second groove 113, and the third groove 114) and the active material (for example, the positive electrode active material 105 or the negative electrode active material 106) are connected into one piece. In this way, the insulation adhesive layers (for example, the first insulation adhesive layer 121, the second insulation adhesive layer 122, the third insulation adhesive layer 123, and the fourth insulation adhesive layer 124) covering the active material are prevented from deviating from initial applying positions. Therefore, the insulation adhesive layers (for example, the first insulation adhesive layer 121, the second insulation adhesive layer 122, the third insulation adhesive layer 123, and the fourth insulation adhesive layer 124) covering the active material still maintain the initial insulation function, which can effectively reduce the risk of lithium precipitation and improve the use safety of a battery formed by winding the electrode core.

In an example, the first groove 112 is a through groove. The first groove 112 includes a first left wall and a first right wall. The second insulation adhesive layer 122 includes a second left insulation adhesive layer arranged on the first left wall and a second right insulation adhesive layer arranged on the first right wall.

The second left insulation adhesive layer and the second right insulation adhesive layer overlap at opposite positions at the bottom of the first groove 112. Alternatively, the second left insulation adhesive layer and the second right insulation adhesive layer are spaced apart at opposite positions at the bottom of the first groove 112.

In an example, the third groove 114 is a through groove. The third groove 114 includes a third left wall and a third right wall. The fourth insulation adhesive layer 124 includes a fourth left insulation adhesive layer 1241 arranged on the third left wall and a fourth right insulation adhesive layer arranged on the third right wall 1242 .

The fourth left insulation adhesive layer 1241 and the fourth right insulation adhesive layer 1242 overlap at opposite positions at the bottom of the third groove 114. Alternatively, the fourth left insulation adhesive layer 1241 and the fourth right insulation adhesive layer 1242 are spaced apart at opposite positions at the bottom of the third groove 114.

For example, the second left insulation adhesive layer and the second right insulation adhesive layer overlap at opposite positions at the bottom of the first groove 112, and the fourth left insulation adhesive layer 1241 and the fourth right insulation adhesive layer 1242 overlap at opposite positions at the bottom of the third groove 114.

In an example, the second left insulation adhesive layer and the second right insulation adhesive layer overlap at opposite positions at the bottom of the first groove 112, and the fourth left insulation adhesive layer 1241 and the fourth right insulation adhesive layer 1242 are spaced apart at opposite positions at the bottom of the third groove 114.

In an example, the second left insulation adhesive layer and the second right insulation adhesive layer are spaced apart at opposite positions at the bottom of the first groove 112, and the fourth left insulation adhesive layer 1241 and the fourth right insulation adhesive layer 1242 overlap at opposite positions at the bottom of the third groove 114.

In an example, the second left insulation adhesive layer and the second right insulation adhesive layer are spaced apart at opposite positions at the bottom of the first groove 112, and the fourth left insulation adhesive layer 1241 and the fourth right insulation adhesive layer 1242 are spaced apart at opposite positions at the bottom of the third groove 114.

It should be noted that if the left insulation adhesive layer and the right insulation adhesive layer in the groove are arranged in an overlapping manner, a recess caused by removal of the active material can be better filled, which improves the flatness of the electrode core, is beneficial to pressurized formation, and alleviates bending and deformation of the battery. Further, problems, such as a short-circuit, caused by bending and deformation of the electrode core can be avoided, which eventually improves the safety performance of a battery formed by winding the electrode core.

In this way, that the left insulation adhesive layer and the right insulation adhesive layer are arranged in an overlapping manner can avoid that the adhesiveness of the insulation adhesive layers covering the active material is weakened or lost because the electrolyte from a porous active material (for example, the positive electrode active material 105 or the negative electrode active material 106) infiltrates the insulation adhesive layers covering the active material. However, because parts of the insulation adhesive layers still covering the grooves (for example, the negative electrode tab groove 111, the first groove 112, the second groove 113, and the third groove 114) are tightly combined with the corresponding current collectors (for example, the positive electrode current collector 101 and the negative electrode current collector 102), the electrolyte cannot infiltrate the insulation adhesive layers. Free radicals of the electrolyte cannot infiltrate the insulation adhesive layers. The insulation adhesive layers located on the grooves (for example, the negative electrode tab groove 111, the first groove 112, the second groove 113, and the third groove 114) can still maintain good adhesiveness.

If the adhesiveness of the insulation adhesive layer is weakened or lost because either of the left insulation adhesive layer and the right insulation adhesive layer covering the groove is infiltrated by the electrolyte, or applying of an adhesive tape is missed because one of the adhesive applying mechanisms is abnormal, the remaining insulation adhesive layer on the other side can still maintain good bonding performance, which ensures the initial effective insulation and can reduce the risk of lithium precipitation.

If for both the left insulation adhesive layer and the right insulation adhesive layer covering the groove, the adhesiveness of the insulation adhesive layers covering the active material are weakened or lost due to electrolyte infiltration, because the left insulation adhesive layer and the right insulation adhesive layer are arranged in an overlapping manner, the insulation adhesive layers arranged in an overlapping manner are tightly bonded to the groove and can still ensure a good insulation effect. The double-layer arrangement of the insulation adhesive layers arranged in an overlapping manner even further improves the insulation effect, thereby greatly improving the use safety of a battery formed by winding the electrode core.

It should be noted that if a left insulation adhesive layer and a right insulation adhesive layer are spaced apart at opposite positions at the bottom of the groove, a usage amount of the insulation adhesive layer can be saved while ensuring the insulation effect, thereby further reducing the thickness of the electrode core.

In addition, the insulation adhesive layers can also be arranged to implement a heat insulation function, and can avoid contact between the positive electrode active material 105 that falls off and the negative electrode current collector 102 or contact between the negative electrode active material 106 that falls off and the positive electrode current collector 101, thereby further reducing the risk of heat generation and explosion of the electrode core.

In an example, the electrode core further includes a positive electrode tab 103. A positive electrode tab groove 115 is provided on the positive electrode active material 105. The positive electrode tab 103 is arranged in the positive electrode tab groove 115. A fourth groove 116 is provided on the negative electrode active material 106. The fourth groove 116 is arranged opposite to the positive electrode tab groove 115. In addition, a projection of the positive electrode tab groove 115 on the negative electrode sheet is located in the fourth groove 116.

In an example, a fifth groove 117 is further provided on the positive electrode active material 105. The fifth groove 117 and the positive electrode tab groove 115 are symmetrically arranged on two sides of the positive electrode current collector 101. A sixth groove 118 is further provided on the negative electrode active material 106. The sixth groove 118 is arranged opposite to the fifth groove 117. In addition, a projection of the fifth groove 117 on the negative electrode sheet 12 is located in the sixth groove 118.

In an example, the electrode core further includes a fifth insulation adhesive layer 125, a sixth insulation adhesive layer 126, a seventh insulation adhesive layer 127, and an eighth insulation adhesive layer 128. The fifth insulation adhesive layer 125 is bonded to a bottom of the positive electrode tab groove 115 and extends to the positive electrode active material 105 on a side portion of the positive electrode tab groove 115, or the fifth insulation adhesive layer bonded to an upper surface of the positive electrode tab and extends to the positive electrode active material on a side portion of the positive electrode tab groove. The sixth insulation adhesive layer 126 is bonded to a bottom of the fourth groove 116 and extends to the negative electrode active material 106 on a side portion of the fourth groove 116. The seventh insulation adhesive layer 127 is bonded to a bottom of the fifth groove 117 and extends to the positive electrode active material 105 on a side portion of the fifth groove 117. The eighth insulation adhesive layer 128 is bonded to a bottom of the sixth groove 118 and extends to the negative electrode active material 106 on a side portion of the sixth groove 118.

In an example, the fourth groove 116 is a through groove, including a fourth left wall and a fourth right wall, and the sixth insulation adhesive layer 126 includes a sixth left insulation adhesive layer arranged on the fourth left wall and a sixth right insulation adhesive layer arranged on the fourth right wall. The sixth left insulation adhesive layer and the sixth right insulation adhesive layer overlap at opposite positions at the bottom of the fourth groove 116. Alternatively, the sixth left insulation adhesive layer and the sixth right insulation adhesive layer are spaced apart at opposite positions at the bottom of the fourth groove 116. In an embodiment, the sixth groove 118 is a through groove, including a sixth left wall and a sixth right wall, and the eighth insulation adhesive layer 128 includes an eighth left insulation adhesive layer arranged on the sixth left wall and an eighth right insulation adhesive layer arranged on the sixth right wall. The eighth left insulation adhesive layer and the eighth right insulation adhesive layer overlap at opposite positions at the bottom of the sixth groove 118. Alternatively, the eighth left insulation adhesive layer and the eighth right insulation adhesive layer are spaced apart at opposite positions at the bottom of the sixth groove 118.

In an example, central axes of the negative electrode tab groove 111, the first groove 112, the second groove 113, and the third groove 114 are collinear.

In an example, central axes of the positive electrode tab groove 115, the fourth groove 116, the fifth groove 117, and the sixth groove 118 are collinear.

According to another embodiment of the present disclosure, an electrode core is provided. As shown in FIG. 2 and FIG. 3, the electrode core includes a positive electrode sheet 11, a positive electrode tab 103, and a negative electrode sheet 12. The positive electrode sheet 11 includes a positive electrode current collector 101 and a positive electrode active material 105 attached to the positive electrode current collector 101. A positive electrode tab groove 115 is provided on the positive electrode active material 105. A positive electrode tab 103 is arranged in the positive electrode tab groove 115. The negative electrode sheet 12 includes a negative electrode current collector 102 and a negative electrode active material 106 attached to the negative electrode current collector 102. A fourth groove 116 is provided on the negative electrode active material 106. The fourth groove 116 is arranged opposite to the positive electrode tab groove 115. In addition, a projection of the positive electrode tab groove 115 on the negative electrode sheet is located in the fourth groove 116.

In an embodiment of the present disclosure, the fourth groove 116 provided on the negative electrode active material 106 is arranged opposite to a position of the positive electrode tab groove 115 provided on the positive electrode active material 105. In addition, a projection of the positive electrode tab groove 115 on the negative electrode sheet 12 is located in the fourth groove 116.

It should be noted that, that a projection of the positive electrode tab groove 115 on the negative electrode sheet 12 is located in the fourth groove 116 means that the fourth groove 116 can completely include the positive electrode tab groove 115, and a size of the fourth groove 116 needs to be larger than a size of the positive electrode tab groove 115.

After substances, such as burrs and dendrites, on the positive electrode tab groove 115 and the fourth groove 116 pierce the separator 107, because the fourth groove 116 has a size larger than that of the positive electrode tab groove 115 and can completely include the positive electrode tab groove 115, even if the substances, such as burrs and dendrites, pierce the separator 107, and arrive at the other side of the separator 107, a probability that the substances come into contact with the negative electrode active material 106 on the negative electrode sheet 12 is small. Through such an arrangement manner, a risk that the electrode core violently generates heat or even explodes is significantly reduced. Use safety of the electrode core is significantly improved.

Although the phenomenon that the burrs and/or dendrites come into contact with the negative electrode tab groove 111 may occur, an amount of heat generated by such contact is very small, and therefore, the safety hazard of the electrode core is small.

The fourth groove 116 provided on the negative electrode sheet 12 and the positive electrode tab groove 115 provided on the positive electrode sheet 11 can be formed by laser cleaning, intermittent coating, or stripping, which, certainly, is not limited herein. A person skilled in the art can choose a grooving manner according to actual needs.

In an example, a fifth groove 117 is further provided on the positive electrode active material 105. The fifth groove 117 and the positive electrode tab groove 115 are symmetrically arranged on two sides of the positive electrode current collector 101.

A sixth groove 118 is provided on the negative electrode active material 106. The sixth groove 118 is arranged opposite to the fifth groove 117. In addition, a projection of the fifth groove 117 on the negative electrode sheet 12 is located in the sixth groove 118.

For example, the positive electrode sheet 11 includes a positive electrode current collector 101 and a positive electrode active substance attached to the positive electrode current collector 101. The positive electrode active material 105 is attached to both sides of the positive electrode current collector 101. A positive electrode tab groove 115 is provided on a first side of the positive electrode current collector 101 and is configured to mount the positive electrode tab 103. A fifth groove 117 is provided on a second side of the positive electrode current collector 101. The fifth groove 117 and the positive electrode tab groove 115 are symmetrically arranged on two sides of the positive electrode current collector 101. In this way, the positive electrode active material 105 is cleared on the two sides of the positive electrode current collector 101 in equal amounts, so that the fifth groove 117 and the positive electrode tab groove 115 that are formed respectively can be smoother, which avoids generation of more burrs, and simplifies the procedure and process. In addition, it is also ensured that there is still a sufficient amount of positive electrode active material 105 on the positive electrode sheet 11, so that there is enough active material in the electrode core for reaction, which ensures the energy density of a battery subsequently formed by winding the electrode core.

A sixth groove 118 is provided on the negative electrode active material 106. The sixth groove 118 is arranged opposite to the fifth groove 117. In addition, a projection of the fifth groove 117 on the negative electrode sheet 12 is located in the sixth groove 118.

The sixth groove 118 provided on the negative electrode active material 106 is arranged opposite to the fifth groove 117 provided on the positive electrode active material 105. In addition, a projection of the fifth groove 117 on the negative electrode sheet 12 is located in the sixth groove 118.

It should be noted that, that a projection of the fifth groove 117 on the negative electrode sheet 12 is located in the sixth groove 118 means that the sixth groove 118 can completely include the fifth groove 117, and a size of the sixth groove 118 needs to be larger than a size of the fifth groove 117.

After substances, such as burrs and dendrites, on the fifth groove 117 and the sixth groove 118 pierce the separator 107, because the sixth groove 118 has a size larger than that of the fifth groove 117 and can completely include the fifth groove 117, even if the substances, such as burrs and dendrites, pierce the separator 107, and arrive at the other side of the separator 107, a probability that the substances come into contact with the negative electrode active material 106 on the negative electrode sheet 12 is small. Through such an arrangement manner, a risk that the electrode core violently generates heat or even explodes is significantly reduced. Use safety of the electrode core is significantly improved.

Although the phenomenon that the burrs and/or dendrites come into contact with the negative electrode tab groove 111 may occur, an amount of heat generated by such contact is very small, and therefore, the safety hazard of the electrode core is small.

In an example, the electrode core further includes a fifth insulation adhesive layer 125, a sixth insulation adhesive layer 126, a seventh insulation adhesive layer 127, and an eighth insulation adhesive layer 128. The fifth insulation adhesive layer 125 is bonded to a bottom of the positive electrode tab groove 115, and extends to the positive electrode active material 105 on a side portion of the positive electrode tab groove 115. Alternatively, the fifth insulation adhesive layer 125 is bonded to an upper surface of the positive electrode tab and extends to the positive electrode active material 105 on a side portion of the positive electrode tab groove 115.

The sixth insulation adhesive layer 126 is bonded to a bottom of the fourth groove 116 and extends to the negative electrode active material 106 on a side portion of the fourth groove 116. The seventh insulation adhesive layer 127 is bonded to a bottom of the fifth groove 117 and extends to the positive electrode active material 105 on a side portion of the fifth groove 117. The eighth insulation adhesive layer 128 is bonded to a bottom of the sixth groove 118 and extends to the negative electrode active material 106 on a side portion of the sixth groove 118.

In this example, the insulation adhesive layers are arranged on the positive electrode tab groove 115, the fourth groove 116, the fifth groove 117, and the sixth groove 118 respectively, and the insulation adhesive layers completely cover the grooves and extend to the active material on the side portions of the grooves. Because neither the positive electrode current collector 101 nor the negative electrode current collector 102 is a porous material, even if the electrolyte from a porous active material (for example, the positive electrode active material 105 or the negative electrode active material 106) infiltrates the insulation adhesive layers covering the active material and weakens or eliminates the adhesiveness of the insulation adhesive layers covering the active material, because parts of the insulation adhesive layers still covering the grooves (for example, the positive electrode tab groove 115, the fourth groove 116, the fifth groove 117, and the sixth groove 118) are tightly combined with the corresponding current collectors (for example, the positive electrode current collector 101 and the negative electrode current collector 102), the electrolyte cannot infiltrate the insulation adhesive layers. Free radicals of the electrolyte cannot infiltrate the insulation adhesive layers. The insulation adhesive layers located on the grooves (for example, the positive electrode tab groove 115, the fourth groove 116, the fifth groove 117, and the sixth groove 118) can still maintain good adhesiveness.

In addition, insulation adhesive layers covering the grooves (for example, the positive electrode tab groove 115, the fourth groove 116, the fifth groove 117, and the sixth groove 118) and the active material (for example, the positive electrode active material 105 or the negative electrode active material 106) are connected into one piece. In this way, the insulation adhesive layers (for example, the fifth insulation adhesive layer 125, the sixth insulation adhesive layer 126, the seventh insulation adhesive layer 127, and the eighth insulation adhesive layer 128) covering the active material are prevented from deviating from initial applying positions. Therefore, the insulation adhesive layers (for example, the fifth insulation adhesive layer 125, the sixth insulation adhesive layer 126, the seventh insulation adhesive layer 127, and the eighth insulation adhesive layer 128) covering the active material still maintain the initial insulation function, which can effectively reduce the risk of lithium precipitation and improve the use safety of a battery formed by winding the electrode core.

In an example, the fourth groove 116 is a through groove. The fourth groove 116 includes a fourth left wall and a fourth right wall. The sixth insulation adhesive layer 126 includes a sixth left insulation adhesive layer arranged on the fourth left wall and a sixth right insulation adhesive layer arranged on the fourth right wall.

The sixth left insulation adhesive layer and the sixth right insulation adhesive layer overlap at opposite positions at the bottom of the fourth groove 116. Alternatively, the sixth left insulation adhesive layer and the sixth right insulation adhesive layer are spaced apart at opposite positions at the bottom of the fourth groove 116.

In an example, the sixth groove 118 is a through groove. The sixth groove 118 includes a sixth left wall and a sixth right wall. The eighth insulation adhesive layer 128 includes an eighth left insulation adhesive layer arranged on the sixth left wall and an eighth right insulation adhesive layer arranged on the sixth right wall.

The eighth left insulation adhesive layer and the eighth right insulation adhesive layer overlap at opposite positions at the bottom of the sixth groove 118. Alternatively, the eighth left insulation adhesive layer and the eighth right insulation adhesive layer are spaced apart at opposite positions at the bottom of the sixth groove 118.

For example, the sixth left insulation adhesive layer and the sixth right insulation adhesive layer overlap at opposite positions at the bottom of the fourth groove 116, and the eighth left insulation adhesive layer and the eighth right insulation adhesive layer overlap at opposite positions at the bottom of the sixth groove 118.

In an example, the sixth left insulation adhesive layer and the sixth right insulation adhesive layer overlap at opposite positions at the bottom of the fourth groove 116, and the eighth left insulation adhesive layer and the eighth right insulation adhesive layer are spaced apart at opposite positions at the bottom of the sixth groove 118.

In an example, the sixth left insulation adhesive layer and the sixth right insulation adhesive layer are spaced apart at opposite positions at the bottom of the fourth groove 116, and the eighth left insulation adhesive layer and the eighth right insulation adhesive layer overlap at opposite positions at the bottom of the sixth groove 118.

In an example, the sixth left insulation adhesive layer and the sixth right insulation adhesive layer are spaced apart at opposite positions at the bottom of the fourth groove 116, and the eighth left insulation adhesive layer and the eighth right insulation adhesive layer are spaced apart at opposite positions at the bottom of the sixth groove 118.

It should be noted that if the left insulation adhesive layer and the right insulation adhesive layer in the groove are arranged in an overlapping manner, a recess caused by removal of the active material can be better filled, which improves the flatness of the electrode core, is beneficial to pressurized formation, and alleviates bending and deformation of the battery. Further, problems, such as a short-circuit, caused by bending and deformation of the electrode core can be avoided, which eventually improves the safety performance of a battery formed by winding the electrode core.

In this way, that the left insulation adhesive layer and the right insulation adhesive layer are arranged in an overlapping manner can avoid that the adhesiveness of the insulation adhesive layers covering the active material is weakened or lost because the electrolyte from a porous active material (for example, the positive electrode active material 105 or the negative electrode active material 106) infiltrates the insulation adhesive layers covering the active material. However, because parts of the insulation adhesive layers still covering the grooves (for example, the positive electrode tab groove 115, the fourth groove 116, the fifth groove 117, and the sixth groove 118) are tightly combined with the corresponding current collectors (for example, the positive electrode current collector 101 and the negative electrode current collector 102), the electrolyte cannot infiltrate the insulation adhesive layers. Free radicals of the electrolyte cannot infiltrate the insulation adhesive layers. The insulation adhesive layers located on the grooves (for example, the positive electrode tab groove 115, the fourth groove 116, the fifth groove 117, and the sixth groove 118) can still maintain good adhesiveness.

If the adhesiveness of the insulation adhesive layer is weakened or lost because either of the left insulation adhesive layer and the right insulation adhesive layer covering the groove is infiltrated by the electrolyte, or applying of an adhesive tape is missed because one of the adhesive applying mechanisms is abnormal, the remaining insulation adhesive layer on the other side can still maintain good bonding performance, which ensures the initial effective insulation and can reduce the risk of lithium precipitation.

If for both the left insulation adhesive layer and the right insulation adhesive layer covering the groove, the adhesiveness of the insulation adhesive layers covering the active material are weakened or lost due to electrolyte infiltration, because the left insulation adhesive layer and the right insulation adhesive layer are arranged in an overlapping manner, the insulation adhesive layers arranged in an overlapping manner are tightly bonded to the groove and can still ensure a good insulation effect. The double-layer arrangement of the insulation adhesive layers arranged in an overlapping manner even further improves the insulation effect, thereby greatly improving the use safety of a battery formed by winding the electrode core.

It should be noted that if a left insulation adhesive layer and a right insulation adhesive layer are spaced apart at opposite positions at the bottom of the groove, a usage amount of the insulation adhesive layer can be saved while ensuring the insulation effect, thereby further reducing the thickness of the electrode core.

In addition, the insulation adhesive layers can also be arranged to implement a heat insulation function, and can avoid contact between the positive electrode active material 105 that falls off and the negative electrode current collector 102 or contact between the negative electrode active material 106 that falls off and the positive electrode current collector 101, thereby further reducing the risk of heat generation and explosion of the electrode core.

According to another embodiment of the present disclosure, a battery apparatus is provided. The battery apparatus includes the foregoing electrode core.

The battery apparatus may be, but is not limited to, a lithium-ion battery, a sodium-ion battery, a nickel metal hydride battery, a nickel cadmium battery, and the like. The battery apparatus may be a pouch battery or a cylindrical battery.

The battery apparatus includes a housing and an electrode core. The electrode core is arranged inside the housing. The battery apparatus has a characteristic of good safety performance.

According to another embodiment of the present disclosure, an electronic device is provided. The electronic device includes the foregoing battery apparatus.

For example, the electronic device may be a vehicle, a mobile phone, an earphone, a stylus, a VR device, an AR device, or the like, which is not limited herein, and a person skilled in the art may make a selection according to actual needs.

The electronic device has a characteristic of a high safety factor.

### <Second solution>

According to an embodiment of the present disclosure, an electrode core is provided. As shown in FIG. 6, the electrode core includes a positive electrode sheet A11, a negative electrode sheetA12, and a separatorA107.

The positive electrode sheet A11. includes a positive electrode current collector A101 and a positive electrode active materialA105 attached to the positive electrode current collector A101. At least one first recessed region A111 to which no positive electrode active material A105 is attached is arranged on the positive electrode current collector A1 01. A positive electrode tab A103 is arranged in the at least one first recessed region A11 1. As shown in FIG. 6, a positive electrode tab A103 is arranged in a first recessed region A111 located above. No positive electrode tab A103 is arranged in a first recessed region A111 located below.

The negative electrode sheet A12 includes a negative electrode current collector A102 and a negative electrode active materialA106 attached to the negative electrode current collectorA102. At least one second recessed regionA113 to which no negative electrode active material A106 is attached is arranged on the negative electrode current collector A102. No negative electrode tab A104 is arranged in the second recessed region A113. In this way, an explosion caused by burrs and solder joints of the positive electrode current collector A101 or the positive electrode tab A103 in the first recessed region A111 piercing the separator and then coming into contact with the negative electrode active materialA106 can be avoided. The second recessed region A113 is arranged opposite to the first recessed regionA111. The separator is located between the positive electrode sheet A11 and the negative electrode sheetA12.

Specifically, the electrode core is a winding structure or a laminated structure. The positive electrode active material A105 includes a first active substance. The negative electrode active material A106 includes a second active substance. The first active substance and the second active substance are prepared into slurries and applied to corresponding current collectors. During charging and discharging, a conductive substance migrates between the first active substance and the second active substance. A person skilled in the art may select materials of the first active substance and the second active substance according to actual needs.

The first recessed region A111 and the second recessed region A113 may be formed by laser cleaning, intermittent coating, or stripping. The positive electrode tabA103 is fixed to the first recessed region A111. For example, the positive electrode tab A103 is fixed to the first recessed region A111 by laser welding, ultrasonic welding, resistance welding, conductive adhesive bonding, or the like. The positive electrode tab A103 is metal foil, a metal wire, or the like.

For example, the first recessed region A111 may be located at 1/4 to 3/4 of a length from a start to an end of the first current collector. Such a position can reduce the ohmic impedance and improve fast charging performance of the battery apparatus. The length refers to a length of the first current collector after the first current collector is unwound. Certainly, the position of the first recessed region A111 on the first current collector is not limited herein, and a person skilled in the art may make a selection according to actual needs. In an example, a positive electrode groove is provided on the positive electrode sheet A11. A bottom portion of the positive electrode groove is the first recessed region A111 . A negative electrode groove is provided on the negative electrode sheetA12. A bottom portion of the negative electrode groove is the second recessed regionA113 .

For example, by laser cleaning, intermittent coating, or stripping, the positive electrode active material A105 can be removed from the positive electrode sheet A11. to form a positive electrode groove, and the negative electrode active material A106 can be removed from the negative electrode sheet A12 to form a negative electrode groove. The positive electrode current collectorA101 and the negative electrode current collectorA102 implement a conduction function. Generally, the positive electrode current collector A101 and the negative electrode current collectorA102 are metal foil.

For example, the materials of the metal foil and the metal wire may be, but are not limited to, copper, aluminum, iron, platinum, gold, silver, lead, tin, and the like.

The first recessed region A111 is arranged opposite to the second recessed region A113. For example, the first recessed region A111 is located on one side of the separator and faces the separator. The second recessed region A113 is located on the other side of the separator and faces the separator. The first recessed region A111 and the second recessed region A113 are separated by the separator. The separator can implement an insulation function, to avoid a short-circuit caused by direct contact between the first recessed region A111 and the second recessed region A113.

Using a lithium-ion battery as an example, the conductive substance is lithium ions. The first active substance is lithium manganate, lithium cobalt oxide, lithium nickel cobalt manganate, lithium iron phosphate, or the like. The positive electrode current collector A101 is aluminum foil. The second active substance is graphite, silicon, or the like. The negative electrode current collectorA102 is copper foil.

During charging and discharging, lithium ions are intercalated and deintercalated back and forth between the positive electrode sheet and the negative electrode sheet A12. During charging, lithium ions are deintercalated from the first active substance of the positive electrode sheet A11, and intercalated into the second active substance of the negative electrode sheet A12 through an electrolyte and the separator In this case, the negative electrode sheet A12 is in a lithium-rich state. Reversely, during discharging, lithium ions located in the second active substance are deintercalated from the negative electrode sheet A12, and intercalated into the first active substance of the positive electrode sheet A11 through the electrolyte and the separator, so that a potential difference is formed between the positive electrode sheet and the negative electrode sheetA12.

Certainly, specific components of the electrode core are not limited herein, and a person skilled in the art may make a selection according to actual needs.

During machining, the positive electrode foil is prone to form burrs. An edge of the first recessed region A111 and/or an edge of the positive electrode tab A103 is prone to form burrs, and welding parts of the positive electrode tab A103 and the positive electrode current collector A101 are also prone to generate welding burrs. If the burrs come into contact with the negative electrode active material A106 after piercing the separator, the electrode core violently generates heat or even explodes.

In addition, if dendrites are formed on the first recessed region A111 and/or the positive electrode tab A103, that the dendrites come into contact with the negative electrode active material A106 after piercing the separator may also cause the electrode core to violently generate heat or even explode.

In an embodiment of the present disclosure, the first recessed region A111 is arranged opposite to the second recessed region A1 13. In this way, even if burrs, dendrites, and the like of the first recessed region A111 and the positive electrode tab A103 pierce the separator and arrive at the other side of the separator, a probability that the burrs, the dendrites, and the like come into contact with the negative electrode active material A106 is small. Through such an arrangement manner, a risk that the electrode core violently generates heat or even explodes is significantly reduced. Use safety of the electrode core is significantly improved.

Although the phenomenon that the burrs and/or dendrites come into contact with the second recessed region A113 may occur, an amount of heat generated by such contact is very small, and therefore, the safety hazard of the electrode core is small.

In an example, as shown in FIG. 6, the electrode core further includes a first insulation material adhesive layer A121 and a second insulation material adhesive layer A123.

The at least one first recessed region A111 is attached to by the first insulation material adhesive layer A121.

In an example, the at least one second recessed region A113 is attached to by the second insulation material adhesive layer A123.

For example, the first insulation material adhesive layer A121 and the second insulation material adhesive layer A123 are adhesive layers with adhesiveness. The first insulation material adhesive layer A121 and the second insulation material adhesive layer A123 are fixed by bonding.

Specifically, the first insulation material adhesive layer A121 is bonded to the first recessed region A111, or the second insulation material adhesive layer A123 is bonded to the second recessed region A113.

Alternatively, the first insulation material adhesive layer A121 is bonded to the first recessed region A111, and the second insulation material adhesive layer A123 is bonded to the second recessed region A113.

That the first insulation material adhesive layer A121 is bonded to the first recessed region A111 may be that the first insulation material adhesive layer A121 completely covers the first recessed region A111 or partially covers the first recessed region A111. The first insulation material adhesive layer A121 partially covers the first recessed region A111. The first insulation material adhesive layer A121 may cover an edge position of the first recessed region A111.

That the second insulation material adhesive layer A123 is bonded to the second recessed region A113 may be that the second insulation material adhesive layer A123 completely covers the second recessed region A113 or partially covers the second recessed region A113. The second insulation material adhesive layerA123 partially covers the second recessed region A 113. The second insulation material adhesive layer A123 may cover an edge position of the second recessed regionA113.

The first insulation material adhesive layerA121 and the second insulation material adhesive layer A123 cover burrs and/or dendrites, so that a probability that the separator is pierced can be reduced, thereby further improving the use safety of the electrode core.

In an example, as shown in FIG. 6, a projection of the first recessed region A111 on the negative electrode sheet A12 is located in a range of the second recessed region A113. An area of the second recessed regionA113 is larger than an area of the first recessed region A111.

For example, a shape of the first recessed region A111 is similar to a shape of the second recessed region A113. An area of the second recessed region A113 is larger than an area of the first recessed region A111 . In such a manner, because a region of the first recessed region A111 in which burrs can be generated is located in the range of the second recessed region A113, in other words, located outside the negative electrode active material A106, even if burrs, dendrites, and the like of the first recessed region A111 and the positive electrode tab A103 pierce the separator and arrive at the other side of the separator, the burrs, the dendrites, and the like do not come into contact with the negative electrode active material A106. Therefore, the risk that the electrode core violently generates heat or even explodes is extremely low. Use safety of the electrode core is very high.

For example, the first recessed region A111 and the second recessed region A113 are rectangular, and a width and a length of the second recessed region A113 are both larger than a width and a length of the first recessed region A111, for example, by 1 mm or more on a single side. The length is a dimension along an axis X. In the range, burrs, dendrites, and the like can be effectively prevented from coming into contact with the negative electrode active material A106.

A region of the first recessed region A111 in which burrs or dendrites can be generated is located in the range of the second recessed region A113, in other words, located outside the negative electrode active material A106, even if burrs, dendrites, and the like of the first recessed region A111 and the positive electrode tab A103 pierce the separator and arrive at the other side of the separator, the burrs, the dendrites, and the like do not come into contact with the negative electrode active material A106. Therefore, the risk that the electrode core violently generates heat or even explodes is extremely low. Use safety of the electrode core is very high.

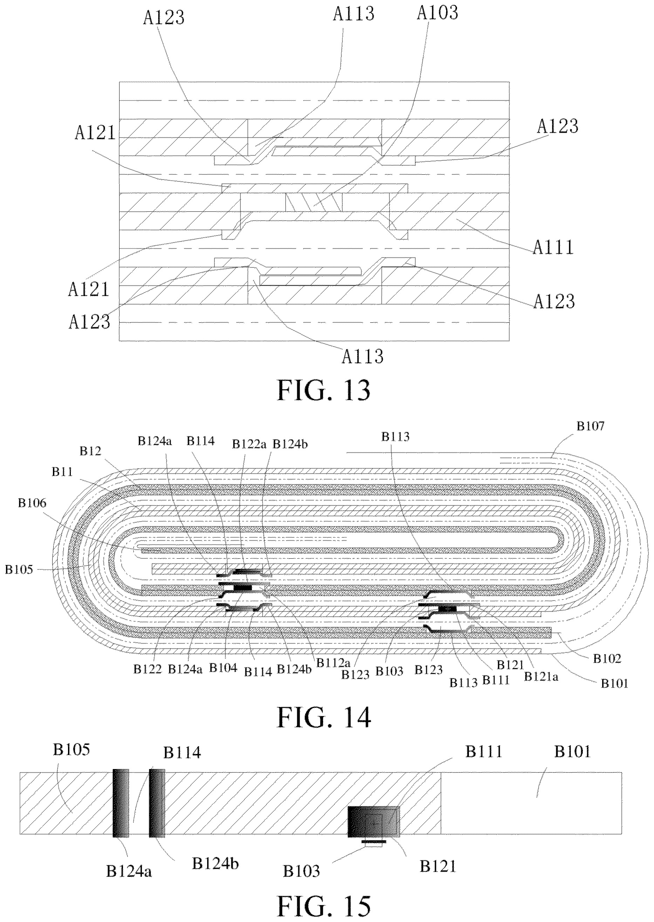

In an example, as shown in FIG. 13, a bottom portion of the positive electrode groove on the positive electrode sheet A11 is the first recessed region A111, and the first insulation material adhesive layerA121 is fixed to the first recessed region A111, and extends to a side portion of the positive electrode groove.

In an example, a bottom portion of the negative electrode groove on the negative electrode sheetA12 is the second recessed region A113, and the second insulation material adhesive layer A123 is fixed to the second recessed region A113, and extends to a side portion of the negative electrode groove.

In this example, a part of the first insulation material adhesive layer A121 is located in the first recessed region A111, and another part thereof is located on the positive electrode active material A105.

In an example, a part of the second insulation material adhesive layer A123 is located in the second recessed region A1 13, and another part thereof is located on the negative electrode active material A106.

Because neither the positive electrode current collector A101 nor the negative electrode current collectorA102 is a porous material, even if the electrolyte from a porous active material (for example, the negative electrode active material A106 or the positive electrode active materialA105) infiltrates the first insulation material adhesive layerA121 and the second insulation material adhesive layerA123 covering the active material and weakens or eliminates the adhesiveness of the first insulation material adhesive layer A121 and the second insulation material adhesive layerA123 covering the active material, because parts of the first insulation material adhesive layer A121 and the second insulation material adhesive layer A123 covering a blank region (for example, the first recessed region A111 or the second recessed regionA113) are tightly combined with the corresponding current collectors (for example, the positive electrode current collector A101 and the negative electrode current collector A102), the electrolyte cannot infiltrate the insulation adhesive layers. Free radicals of the electrolyte cannot infiltrate the first insulation material adhesive layer A121 and the second insulation material adhesive layer A123. The first insulation material adhesive layer A121 and the second insulation material adhesive layer A123 located in the blank region (for example, the first recessed region A111 or the second recessed regionA113) can still maintain good adhesiveness.

In addition, the first insulation material adhesive layerA121 bonded to the first recessed region A111 and the first insulation material adhesive layer A121 bonded to the positive electrode active material A105 are connected into one piece. The second insulation material adhesive layer A123 bonded to the second recessed region A113 and the second insulation material adhesive layerA123 bonded to the negative electrode active materialA106 are connected into one piece. In this way, the insulation adhesive layers (for example, the first insulation material adhesive layer A121 and the second insulation material adhesive layer A123) covering the active material are prevented from deviating from initial applying positions. Therefore, the insulation adhesive layers (for example, the first insulation material adhesive layer A121 and the second insulation material adhesive layer A123) covering the active material still maintain the initial insulation function, which can effectively reduce the risk of lithium precipitation.

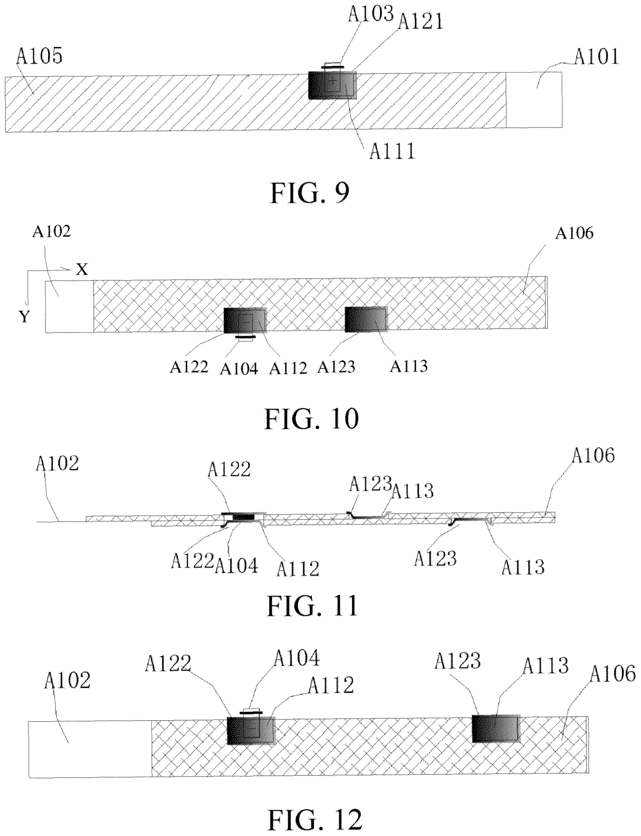

In an example, as shown in FIG. 7 to FIG. 12, the first insulation material adhesive layerA121 covers the first recessed region A111.

In an example, the second insulation material adhesive layerA123 covers the second recessed region A113.

In this example, the insulation adhesive layers (for example, the first insulation material adhesive layerA121 and the second insulation material adhesive layerA123) can effectively protect the first recessed region A111 and/or the second recessed regionA113, to avoid the electrolyte from corroding the positive electrode current collector A101 and/or the negative electrode current collectorA102 excessively.

In addition, the insulation adhesive layers (for example, the first insulation material adhesive layerA121 and the second insulation material adhesive layer A123) can also implement a heat insulation function, to prevent heat generated when the positive electrode tab A103 is welded to an external element from spreading to another part of the electrode core.

In addition, the first insulation material adhesive layer A121 covering the first recessed region A111 and the first insulation material adhesive layerA121 covering the positive electrode active materialA105 are connected into one piece, and the second insulation material adhesive layer A123 covering the second recessed region A113 and the second insulation material adhesive layer A123 covering negative electrode active material A106 are connected into one piece, which can avoid the positive electrode active material A105 that falls off from coming into contact with the negative electrode current collector A102, or the negative electrode active material A106 that falls off from coming into contact with the positive electrode current collectorA101, thereby further reducing the risk that the electrode core generates heat or explodes.

In an example, as shown in FIG. 7 to FIG. 12, a side portion of the positive electrode groove includes multiple surfaces, the multiple surfaces form the first recessed region A111 through enclosure, and the first insulation material adhesive layer A121 is arranged all the surfaces; and/or
a side portion of the negative electrode groove includes multiple surfaces, the multiple surfaces form the second recessed regionA113 through enclosure, and the second insulation material adhesive layerA123 is arranged on all the surfaces.

When the positive electrode groove runs through the positive electrode active material in a width direction, in other words, when the first recessed region runs through the positive electrode sheet in the width direction, the side portion of the positive electrode groove includes two opposite surfaces. When the positive electrode groove is a notch of the positive electrode active material in the width direction, in other words, when the first recessed region is a notch on a side of the positive electrode active material in the width direction, the side portion of the positive electrode groove includes three surfaces connected in sequence.

When the negative electrode groove runs through the negative electrode active material in a width direction, in other words, when the second recessed region runs through the negative electrode sheet in the width direction, the side portion of the negative electrode groove includes two opposite surfaces. When the negative electrode groove is a notch of the negative electrode active material in the width direction, in other words, when the second recessed region is a notch on a side of the negative electrode active material in the width direction, the side portion of the negative electrode groove includes three surfaces connected in sequence

In the example, specifically, one insulation adhesive layer (for example, the first insulation material adhesive layer A121 or the second insulation material adhesive layer A123) covers multiple surfaces. In this way, the insulation adhesive layer can fully cover burrs, dendrites, and the like. For example, the first insulation material adhesive layer A121 or the second insulation material adhesive layerA123 may present a U-shaped structure or may be an integral structure.

Alternatively, different insulation adhesive layers (for example, the first insulation material adhesive layer A121 or the second insulation material adhesive layerA123) cover different surfaces respectively.

Because all the surfaces are covered by the insulation adhesive layers (for example, the first insulation material adhesive layer A121 or the second insulation material adhesive layer A123), the insulation adhesive layers (for example, the first insulation material adhesive layer A121 or the second insulation material adhesive layer A123) can effectively isolate active materials (for example, the positive electrode active materialA105 and the negative electrode active materialA106) on the surfaces, to reduce the risk of lithium precipitation.

In an example, as shown in FIG. 13, the first insulation material adhesive layers A121 on the different surfaces are arranged independently.

In an example, the second insulation material adhesive layers A123 on the different surfaces are arranged independently.

For example, the positive electrode active material A105 includes two sides parallel to the width direction. A region between the two sides is the first recessed region A111 . First insulation material adhesive layers A121 are arranged on both the sides. The two first insulation material adhesive layers A121 are arranged opposite to each other. One part of each of the first insulation material adhesive layers A121 is bonded to the positive electrode active material A105, and another part thereof is bonded to the first recessed region A111.

The negative electrode active material A106 includes two opposite surfaces parallel to the width direction. A region between the two opposite surfaces is the second recessed regionA113. In other words, the two opposite surfaces are the side portion of the negative electrode groove. Second insulation material adhesive layers A123 are arranged on both the opposite surfaces. The two second insulation material adhesive layers A123 are arranged opposite to each other. One part of each of the second insulation material adhesive layers A123 is bonded to the negative electrode active material A106, and another part thereof is bonded to the second recessed regionA113.

The positive electrode active material A105 includes two opposite surfaces parallel to the width direction. A region between the two opposite surfaces is the first recessed region A111. In other words, the two opposite surfaces are the side portion of the positive electrode groove. First insulation material adhesive layers A121 are arranged on both the opposite surfaces. The two first insulation material adhesive layers A121 are arranged opposite to each other. One part of each of the first insulation material adhesive layers A121 is bonded to the positive electrode active material A105, and another part thereof is bonded to the first recessed region A111.

Certainly, the side portion of the positive electrode groove and the side portion of the negative electrode groove are not limited to two surfaces, and a person skilled in the art may make a selection according to actual needs.

In the example, because the first insulation material adhesive layers A121 or the second insulation material adhesive layers A123 on different sides are arranged independently, the multiple first insulation material adhesive layers A121 or the multiple second insulation material adhesive layersA123 do not affect each other. In this way, even if some insulation adhesive layers fall off, functions of other insulation adhesive layers are not affected.

In an example, parts of the multiple first insulation material adhesive layers A121 located in the first recessed region A111 are arranged in an overlapping manner.

In an example, parts of the multiple second insulation material adhesive layers A123 located in the second recessed region A113 are arranged in an overlapping manner.

In the example, a manner in which the multiple first insulation material adhesive layers A121 or the multiple third insulation material adhesive layers A122 are arranged in an overlapping manner is shown in FIG. 13. The first insulation material adhesive layers A121 or the second insulation material adhesive layers A123 arranged in an overlapping manner are less likely to be pierced by burrs, dendrites, or the like than one first insulation material adhesive layer A121 or one second insulation material adhesive layer A123. In this way, use safety of the electrode core is higher.

In addition, the first recessed region A111 and the second recessed region A113 are usually bottom portions of grooves. However, the first insulation material adhesive layerA121 or the second insulation material adhesive layerA123 is usually thin. Multiple insulation adhesive layers can fill a groove, so that the overall thickness of the positive electrode sheet A11. and/or the negative electrode sheetA12 is more even, to avoid uneven thicknesses of the positive electrode sheet and the negative electrode sheetA12 from causing a defect of the electrode core during manufacturing.

In an example, parts of the multiple first insulation material adhesive layers A121 located in the first recessed region A111 form a sub-blank region through enclosure.

In an example, parts of the multiple second insulation material adhesive layers A123 located in the second recessed region A113 form a sub-blank region through enclosure.

In the example, the sub-blank region is a part of region of the first recessed region A111 or the second recessed region A1 13. The part of region is not covered by an insulation adhesive layer. In this manner, a usage amount of the first insulation material adhesive layerA121 or the second insulation material adhesive layerA123 can be reduced, to save raw materials.

In addition, the sub-blank region is not covered by an insulation adhesive layer, so that the first current collector or the second current collector has better heat dissipation performance.

In an example, as shown in FIG. 8, first recessed regions A111 are arranged symmetrically with respect to the positive electrode current collector A101. A positive electrode tab A103 is arranged in one of the first recessed regions A111.

In the example, the two symmetrically arranged first recessed regions A111 provide space for welding of the positive electrode tab A103. For example, the positive electrode tab A103 is welded to one of the first recessed regions A111 by laser welding, resistance welding, or ultrasonic welding.

In the example, the two symmetrically arranged first recessed regions A111 provide space for resistance welding, laser welding, or ultrasonic welding of the positive electrode tab A103. The two first insulation material adhesive layers A121 can prevent burrs of the two first recessed regions A111 from piercing the separator.

In an example, at least one of the first insulation material adhesive layer A121 and the second insulation material adhesive layer A123 is a single-sided tape, a high-temperature adhesive, or an insulation film.

In an example, at least one of the first insulation material adhesive layer A121 and the second insulation material adhesive layer A123 is a double-sided tape or a hot melt adhesive, at least one of the first insulation material adhesive layer A121 and the second insulation material adhesive layer A123 includes a first adhesive surface and a second adhesive surface that have different adhesion strength. The first adhesive surface is bonded to the separator. Adhesion strength of the first adhesive surface is greater than adhesion strength of the second adhesive surface.

In the example, on the condition that the first insulation material adhesive layer A121 or the second insulation material adhesive layer A123 is a single-sided tape, a high-temperature adhesive, or an insulation film, only one surface of a first adhesive layer, namely, one surface of the first recessed region A111 or the second recessed regionA113, has a bonding effect. On the condition that the first insulation material adhesive layerA121 or the second insulation material adhesive layerA123 is a double-sided tape or a hot melt adhesive, a second adhesive surface is a surface with a weaker bonding effect, and the second adhesive surface is bonded to the first recessed region A111 or the second recessed region A113.

The high-temperature adhesive is an adhesive that maintains adhesion when the battery apparatus operates at a high temperature. The insulation film is an adhesive film formed by curing a liquid adhesive on a corresponding region through a coating-curing method.

For example, the single-sided tape, the double-sided tape, the high-temperature adhesive, or the hot melt adhesive is an adhesive with a polymer material as a base and coated with a viscous component such as an acrylic resin adhesive, an SBR adhesive, or a SIS adhesive. A person skilled in the art may select materials of the base and the viscous component according to actual needs.

Certainly, the material of the first insulation material adhesive layer A121 or the second insulation material adhesive layer A123 is not limited to the foregoing embodiments, and a person skilled in the art may make a selection according to actual needs.

In an example, the first recessed region A111 runs through the positive electrode sheet A11 in the width direction. In the example, the width direction is a Y-axis direction. The positive electrode groove may run through the positive electrode sheet A11 in the width direction. In this case, the side portion of the positive electrode groove includes two opposite surfaces.

In an example, the positive electrode active material A105 is provided with a notch on a side of the positive electrode sheet A11. in the width direction, and the notch forms the first recessed region A111 . In the example, that the positive electrode active material A105 is provided with a notch on a side of the positive electrode sheet A11. in the width direction, and the notch forms the first recessed region A111 means that the positive electrode groove does not run through the positive electrode sheet A11. In this case, the side portion of the positive electrode groove includes three surfaces.

In this way, on the condition that the positive electrode tab A103 can be normally arranged in the first recessed region A1 11, a part of the active material still remains around the first recessed region A111 formed on the positive electrode sheet A11, and the remaining part of the active material can still undergo a lithium ion migration reaction, which improves the energy density of the electrode core.

In an example, the second recessed region A113 runs through the negative electrode sheet A12 in the width direction. In the example, the negative electrode groove may run through the negative electrode sheet A12 in the width direction. In this case, the side portion of the negative electrode groove includes two opposite surfaces.

In an example, the negative electrode active material A106 is provided with a notch on a side of the negative electrode sheet A12 in the width direction, and the notch forms the second recessed region A113. In the example, that the negative electrode active material A106 is provided with a notch on a side of the negative electrode sheet A12 in the width direction, and the notch forms the second recessed region A113 means that the negative electrode groove does not run through the negative electrode sheet A12. In this case, the side portion of the negative electrode groove includes three surfaces.

In this way, on the condition that the negative electrode tab A104 can be normally arranged in the second recessed region A113, a part of the active material still remains around the second recessed region A113 formed on the negative electrode sheet A12, so that migrating lithium ions can be intercalated, which reduces the risk of lithium precipitation.

In addition, the remaining part of the active material can still undergo a lithium ion migration reaction, which increases the energy density of the electrode core.

According to another embodiment of the present disclosure, a battery apparatus is provided. The battery apparatus includes the electrode core stated above. The battery apparatus may be, but is not limited to, a lithium-ion battery, a sodium-ion battery, a nickel metal hydride battery, a nickel cadmium battery, and the like. The battery apparatus may be a pouch battery or a cylindrical battery.

The battery apparatus includes a housing and an electrode core. The electrode core is arranged inside the housing. The battery apparatus has a characteristic of good safety performance.

According to still another embodiment of the present disclosure, an electronic device is provided. The electronic device includes the foregoing battery apparatus.

For example, the electronic device may be a vehicle, a mobile phone, an earphone, a stylus, a VR device, an AR device, or the like, which is not limited herein, and a person skilled in the art may make a selection according to actual needs.

The electronic device has a characteristic of a high safety factor.

### <Embodiment 1>

As shown in FIG. 7 to FIG. 12, this embodiment provides a lithium-ion battery. The lithium-ion battery includes a positive electrode sheet A11, a negative electrode sheetA12, a separatorA107, and an electrolyte. The positive electrode sheet A11. includes a positive electrode current collectorA101, a positive electrode tab A103, a positive electrode active material A105, and a first recessed region A111 . The positive electrode tab A103 is welded to the first recessed region A111.

The negative electrode sheet A12 includes a negative electrode current collector A102, a negative electrode tab A104, a negative electrode active material A106, and a third recessed region A112. The negative electrode tab A104 is welded to the third recessed regionA112.

Front and back surfaces of the first recessed region A111 and the third recessed region A112 are not coated with an active material, and the second recessed regionA113 is arranged at a position in the first recessed region A111 corresponding to the negative electrode sheet A12. The negative electrode active material A106 is on a back surface of the second recessed region A113.

The first insulation material adhesive layer A121 covers the first recessed region A111 and the surrounding positive electrode active material A105, and the third insulation material adhesive layerA122 covers the third recessed region A112 and the surrounding negative electrode active material A106.

The second insulation material adhesive layerA123 covers the second recessed region A113 and the surrounding negative electrode active materialA106.

A length and a width of the first recessed region A111 are smaller than a length and a width of the second recessed region A113. The length is a dimension along an axis X, and the width is a dimension along an axis Y.

A length and a width of the first insulation material adhesive layer A121 are larger than a length and a width of the second insulation material adhesive layer A123. That is, a length and a width of an insulation adhesive layer on the positive electrode sheet A11 need to be larger than those of an insulation adhesive layer on the negative electrode sheetA12, to ensure that lithium precipitation is avoided.

Using a pouch battery (model: 466480, to be specific, a thickness of a battery core is 4.6 mm, a width thereof is 64 mm, and a height thereof is 80 mm) as an example, a method for preparing a lithium-ion battery according to an embodiment of the present disclosure is described below.

The positive electrode sheet is prepared as follows:
A positive electrode active substance LiCoO₂, a carbon nanotube (CNT) conductive agent, a PVDF binder, and NMP are mixed at a mass ratio of 100:0.5:0.7:28, and are stirred into a positive electrode slurry.

The positive electrode slurry is coated on aluminum foil with a thickness of 9 µm, to form the positive electrode active material A105. Areal density of the positive electrode active material A105 is 17.4 mg/cm².

A positive electrode sheet A11. with a width of 73 mm and a length of 1120 mm is obtained through drying, sheeting, and slitting.

The positive electrode active material A105 at a position that is 1/4 of the overall length from an end of the positive electrode sheet A11. is cleaned by using a laser cleaning device, to form a first recessed region A111. A length of the first recessed region A111 is 18 mm, and a width thereof is 10 mm.

The first recessed region A111 and a periphery thereof are covered by a first insulation material adhesive layer A121. A length of the first insulation material adhesive layerA121 is 24 mm, and a width thereof is 16 mm. The first insulation material adhesive layer A121 completely covers the first recessed region A111, and partially covers the positive electrode active material by 3 mm on a single side.

The negative electrode sheet is prepared as follows:
A negative electrode active material, namely, graphite, a Super-P conductive agent, a CMC-Li binder, and deionized water are stirred at a mass ratio of 100:0.3:1.1:110 into a negative electrode slurry.

The negative electrode slurry is coated on copper foil with a thickness of 5 µm, to form a negative electrode active material A106. Areal density of the negative electrode active material A106 is 9.6 mg/cm².

A negative electrode sheet A12 with a width of 74.5 mm and a length of 1040 mm is obtained through drying, sheeting, and then slitting.

A third recessed region A112 is obtained by cleaning the middle, that is, the 1/2 position, of the negative electrode sheet A12 by using a laser cleaning device. A length of the third recessed region A112 is 20 mm, and a width thereof is 12 mm.

A second recessed region A113 with a length of 20 mm and a width of 12 mm is obtained by cleaning a position in the first recessed region A111 corresponding to the negative electrode sheetA12.

The third recessed region A112 and its surrounding negative electrode active material are covered by a third insulation material adhesive layer A122. The third insulation material adhesive layer A122 has a width of 14 mm, a length of 22 mm, and covers a material by 1 mm on a single side.

The second recessed regionA113 and its surrounding negative electrode active material are covered by a second insulation material adhesive layer A123. The second insulation material adhesive layerA123 has a width of 14 mm and a length of 22 mm, covers the negative electrode active material A106 by 1 mm in a width direction, and covers the negative electrode active material A106 by 2 mm in a length direction. Two second recessed regions A113 are arranged on the negative electrode sheet, and the second insulation material adhesive layer A123 is bonded to the two second recessed regions A113.

The electrolyte is prepared as follows:
EMC, DEC, EC, and EP are mixed at a mass ratio of 30%:30%:30%:10%.

LiPF6 is added as a solute. A concentration of LiPF6 is 1 M.

Adiponitrile with a mass percentage of 2% and 1,3,6-hexanetrinitrile with a mass percentage of 2% are added as additives. In addition, they are fully dissolved, to obtain the electrolyte.

The lithium-ion battery is as follows:
The positive electrode sheet A11 and the negative electrode sheetA12 that are prepared as stated above and the separator A107 are manufactured into a core after being wound by a winding device. After being baked and dried, the core is injected with the electrolyte and is manufactured into the final lithium-ion battery after encapsulation and formation.

The lithium-ion battery has a high safety factor.

### <Embodiment 2>

Referring to FIG. 13, in the example, two independent second insulation material adhesive layers A123 are arranged in an overlapping manner in the second recessed regionA113. After the overlapping, a recess caused by the negative electrode groove can be filled, which is beneficial to the overall flatness of the electrode core and reduces bending and deformation of the electrode core.

### <Third solution>

According to an embodiment of the present disclosure, an electrode core is provided. The electrode core is used in a battery apparatus.

As shown in FIG. 14 and FIG. 15, the electrode core includes a first electrode sheet, a first insulation adhesive B124a, and a second insulation adhesive B124b. The first electrode sheet is a positive electrode sheet B11 or a negative electrode sheet B12.

The first electrode sheet includes a current collector and an active material attached to a surface of the current collector. A groove (for example, a fourth avoidance groove B114) is provided on a surface of the active material. The groove (for example, the fourth avoidance groove B114) includes a bottom portion and a first sidewall portion and a second sidewall portion that are arranged opposite to each other. The active material is not attached to the bottom portion of the groove (for example, the fourth avoidance groove 114).

The first insulation adhesive B124a is bonded to the bottom portion and extends to the active material on the first sidewall portion.

The second insulation adhesive B124b is bonded to the bottom portion and extends to the active material on the second sidewall portion.

Specifically, the current collector is metal foil. The groove (for example, the fourth avoidance groove B114) may be formed by laser cleaning, intermittent coating, or stripping. The bottom portion of the groove (for example, the fourth avoidance groove B114) exposes the current collector. For example, a positive electrode current collector B101 is aluminum foil, and a negative electrode current collector B102 is copper foil.

The active material may be a positive electrode active material B105 or a negative electrode active material B106. An electrode core of a lithium-ion battery is used as an example. The positive electrode active material B105 includes lithium manganate, lithium cobalt oxide, lithium nickel cobalt manganate, lithium iron phosphate, or the like. The negative electrode active material B106 includes graphite, silicon, or the like. The first sidewall portion and the second sidewall portion are formed through active material removal processing. The first sidewall portion and second sidewall portion may be arranged opposite to each other or adjacent to each other.

Certainly, the active material is not limited to the foregoing embodiments, and a person skilled in the art may make a selection according to actual needs.

For example, as shown in FIG. 14, the electrode core further includes a second electrode sheet and a separator B107. The separator B107 is located between the first electrode sheet and the second electrode sheet.

Using an electrode core of a lithium-ion battery as an example, during charging and discharging, lithium ions are intercalated and deintercalated back and forth between the positive electrode sheet and the negative electrode sheet B12. During charging, lithium ions are deintercalated from the positive electrode active material B105 of the positive electrode sheet B11, and intercalated into the negative electrode active material B106 of the negative electrode sheet B12 through an electrolyte and the separator B107. In this case, the negative electrode sheet B12 is in a lithium-rich state. Reversely, during discharging, lithium ions located in the negative electrode active material B106 are deintercalated from the negative electrode sheet B12, and intercalated into the positive electrode active material B105 of the positive electrode sheet B11 through the electrolyte and the separator B107, so that a potential difference is formed between the positive electrode sheet and the negative electrode sheet B12.

Certainly, specific components of the electrode core are not limited herein, and a person skilled in the art may make a selection according to actual needs.

In an embodiment of the present disclosure, the first insulation adhesive B124a is bonded to the bottom portion and extends to the active material on the first sidewall portion. The second insulation adhesive B124b is bonded to the bottom portion and extends to the active material on the second sidewall portion. The first insulation adhesive B124a and the second insulation adhesive B124b are arranged separately, and are respectively fixed to the bottom portion. In this way, the first insulation adhesive B124a and the second insulation adhesive B124b can effectively cover the active material on an edge of the groove, thereby avoiding deintercalation of a conductive substance, and further avoiding precipitation of the conductive substance, for example, lithium precipitation, on an electrode sheet of the other polarity.

In addition, the first insulation adhesive B124a and the second insulation adhesive B124b cover a part of the current collector, to avoid a conductive substance, for example, lithium ions, deintercalated from the current collector and the electrode sheet of the other polarity from arriving at the current collector, thereby avoiding precipitation of the conductive substance, for example, lithium precipitation, on the current collector.

In addition, the first insulation adhesive B124a and the second insulation adhesive B124b cover the current collector, to block burrs on the current collector, **thereby preventing** the burrs from piercing the separator B107.

In addition, even if one of the first insulation adhesive B124a and the second insulation adhesive B124b falls off, the effect of the other insulation adhesive in preventing lithium precipitation and preventing the burrs from piercing the separator B107 is not affected, which improves the use safety of the electrode core.

In an example, as shown in FIG. 14, the electrode core further includes a second electrode sheet and a separator B107. The separator B107 is located between the first electrode sheet and the second electrode sheet.

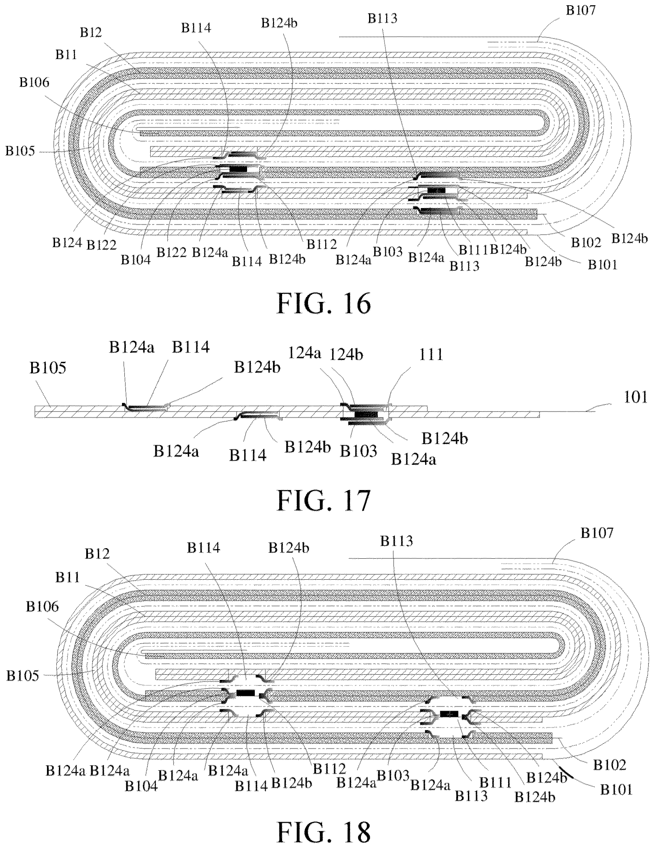

In an example, as shown in FIG. 16, the first insulation adhesive B124a extends from the first sidewall portion to a surface of the active material, and the second insulation adhesive B124b extends from the second sidewall portion to the surface of the active material.

In the example, a part of the first insulation adhesive B124a is located at the bottom portion of the groove (for example, the fourth avoidance groove B114), and another part thereof is located on the active material, for example, the positive electrode active material B105. A part of the second insulation adhesive B124b is located at the bottom portion of the groove (for example, the fourth avoidance groove B114), and another part thereof is located on the active material.

Because neither the positive electrode current collector B101 nor the negative electrode current collector B102 is a porous material, even if the electrolyte from a porous active material (for example, the negative electrode active material B106 or the positive electrode active material B105) infiltrates the first insulation adhesive B124a and the second insulation adhesive B124b covering the active material and weakens or eliminates the adhesiveness of the first insulation adhesive B124a and the second insulation adhesive B124b covering the active material, because parts of the first insulation adhesive B124a and the second insulation adhesive B 124b covering the bottom portion are tightly combined with the corresponding current collectors (for example, the positive electrode current collector B101 and the negative electrode current collector B102), the electrolyte cannot infiltrate the first insulation adhesive B124a and the second insulation adhesive B124b. Free radicals of the electrolyte cannot infiltrate the first insulation adhesive B124a and the second insulation adhesive B124b. Therefore, the first insulation adhesive B124a and the second insulation adhesive B124b located at the bottom portion can still maintain good adhesiveness.

In addition, the first insulation adhesive B124a covering the bottom portion and the first insulation adhesive B124a covering the active material (for example, the negative electrode active material B106 or the positive electrode active material B105) are connected into one piece. The second insulation adhesive B124b covering the bottom portion and the second insulation adhesive B124b covering the active material (for example, the negative electrode active material B106 or the positive electrode active material B105) are connected into one piece. In this way, the insulation adhesive layers (for example, the first insulation adhesive B124a and the second insulation adhesive B124b) covering the active material are prevented from deviating from initial applying positions. Therefore, the first insulation adhesive B124a and the second insulation adhesive B124b that cover the active material still maintain the initial insulation function, which can effectively reduce the risk of lithium precipitation.

In an example, as shown in FIG. 14, FIG. 16, and FIG. 17, parts of the first insulation adhesive B124a and the second insulation adhesive B124b located at the bottom portion are arranged in an overlapping manner.

In this example, the first insulation adhesive B124a and second insulation adhesive B124b are arranged in an overlapping manner, to effectively cover the bottom portion of the groove. Compared with a single first insulation adhesive B 124a or a single second insulation adhesive B124b, the first insulation adhesive B124a and second insulation adhesive B124b that are arranged in an overlapping manner are less likely to be pierced by burrs, dendrites, or the like. In this way, use safety of the electrode core is higher.

In addition, the first insulation adhesive B124a or the second insulation adhesive B124b is usually thin. Multiple layers of insulation adhesives can fill a groove (for example, the fourth avoidance groove B114), so that the overall thickness of the electrode sheet is more even, to avoid uneven thicknesses of the positive electrode sheet and the negative electrode sheet B12 from causing a defect of the electrode core during manufacturing.

In addition, the first insulation adhesive B124a and the second insulation adhesive B124b that are arranged in an overlapping manner can fill a recess caused by the negative electrode groove, which is beneficial to the overall flatness of the electrode core and reduces bending and deformation of the electrode core. Further, problems, such as a short-circuit, caused by bending and deformation of the electrode core can be avoided, which eventually improves the safety performance of a battery formed by winding the electrode core.

In addition, that the first insulation adhesive B124a and the second insulation adhesive B124b are arranged in an overlapping manner in the groove can improve the overall flatness of the electrode core.

In an example, as shown in FIG. 18, FIG. 19, and FIG. 20, parts of the first insulation adhesive B124a and the second insulation adhesive B124b located at the bottom portion are spaced apart.

For example, when the active material attached to the surface of current collector is thin, the parts of the first insulation adhesive B124a and the second insulation adhesive B124b located at the bottom portion are spaced apart and are not arranged in an overlapping manner, to avoid a problem of unevenness caused by that a height after the first insulation adhesive B124a and the second insulation adhesive B124b are arranged in an overlapping manner exceeds a height of the active material.

For example, a blank region is formed between the first insulation adhesive B124a and the second insulation adhesive B124b. The part of region is not covered by an insulation adhesive. In this manner, a usage amount of the first insulation adhesive B124a or the second insulation adhesive B124b can be reduced, to save raw materials.

In addition, the blank region exposes a current collector, for example, the positive electrode current collector B101 or the negative electrode current collector B102, so that the current collector has better heat dissipation performance.

In an example, as shown in FIG. 18, an electrode tab is arranged at the bottom portion, and the electrode tab is located in a region in which the first insulation adhesive B124a and the second insulation adhesive B124b are spaced apart.

For example, the electrode tab is a positive electrode tab B103 or a negative electrode tab B104. The electrode tab is welded to the blank region by laser welding, resistance welding, or ultrasonic welding, or the electrode tab is formed by die-cutting the electrode sheet. In this way, space in the groove (for example, the fourth avoidance groove B114) can be fully utilized.

In an example, a length of a part of the first insulation adhesive B124a extending to the surface of the active material is greater than or equal to 0.5 mm, a length of a part of the second insulation adhesive B124b extending to the surface of the active material is greater than or equal to 0.5 mm.

Within the dimension ranges, the first insulation adhesive B124a and the second insulation adhesive B124b can effectively protect the active material.

In addition, under the condition that the electrode sheet is the positive electrode sheet B11, the dimension ranges can effectively prevent lithium precipitation on the negative electrode sheet B12.

In an example, as shown in FIG. 16, the groove (for example, the fourth avoidance groove B114) is a through groove in a width direction of the electrode sheet. The width direction is a Y-axis direction. For example, the bottom portion is a rectangle. The first insulation adhesive B124a and the second insulation adhesive B124b are respectively arranged on two sides of the rectangle, and extend to sidewall portions, and then extend to the surface of the active material. The first insulation adhesive B124a and the second insulation adhesive B124b are in a Z shape, and are symmetrical with respect to a central axis of the groove (for example, the fourth avoidance groove B114).

In the example, a process of opening the groove (for example, the fourth avoidance groove B114) is simple. When the electrode tab needs to be welded, the space of the bottom portion is large, and it is easy to weld the electrode tab.

In an example, the groove is an open groove facing a side of the current collector in a width direction, and further includes a third sidewall portion connected between the first sidewall portion and the second sidewall portion. The third sidewall portion is opposite to an opening of the open groove.

The electrode core further includes a third insulation adhesive. The third insulation adhesive is bonded to the bottom portion and extends to the active material on the third sidewall portion.

In the example, the open groove is a non-through groove. In this way, on the condition that a first electrode tab can be normally arranged at the bottom portion, a part of the active material still remains around the bottom portion, so that migrating lithium ions can be intercalated, which reduces the risk of lithium precipitation.

In addition, the remaining part of the active material can still undergo a lithium ion migration reaction, which increases the energy density of the electrode core.

In an example, at least one of the first insulation adhesive B124a and the second insulation adhesive B124b is a single-sided tape, a high-temperature adhesive, an insulation film, a double-sided tape, or a hot melt adhesive.

In the example, on the condition that the first insulation adhesive B124a or the second insulation adhesive B124b is a single-sided tape, a high-temperature adhesive, or an insulation film, only one surface of a first adhesive layer, that is, a surface bonded to the bottom portion, has a bonding effect. On the condition that the first insulation adhesive B124a and the second insulation adhesive B124b are double-sided tapes or hot melt adhesives, a second adhesive surface is a surface with a weaker bonding effect, and the second adhesive surface is bonded to the bottom portion. The first adhesive surface is a surface with a strong bonding effect. The first adhesive surface is configured to bond to the separator B107 of the battery apparatus. The first insulation adhesive B124a and the second insulation adhesive B124b can effectively prevent lithium ions from passing through separator B107, thereby reducing the risk of lithium precipitation on the negative electrode sheet B12.

The high-temperature adhesive is an adhesive that maintains adhesion when the battery apparatus operates at a high temperature. The insulation film is an adhesive film formed by curing a liquid adhesive on a corresponding region through a coating-curing method.

For example, the single-sided tape, the double-sided tape, the high-temperature adhesive, or the hot melt adhesive is an adhesive with a polymer material as a base and coated with a viscous component such as an acrylic resin adhesive, an SBR adhesive, or a SIS adhesive. A person skilled in the art may select materials of the base and the viscous component according to actual needs.

Certainly, the material of the insulation adhesive is not limited to the foregoing embodiments, and a person skilled in the art may make a selection according to actual needs.

In an example, as shown in FIG. 14, an electrode tab groove is provided on the second electrode sheet, and an electrode tab is arranged in the electrode tab groove. The electrode core further includes a third insulation adhesive covering the electrode tab groove. The groove is arranged opposite to the electrode tab groove.

In the example, on the condition that the second electrode sheet is a negative electrode sheet B12, the electrode tab is a negative electrode tab B104. On the condition that the second electrode sheet is a positive electrode sheet B11, the electrode tab is a positive electrode tab B103. For example, as shown in FIG. 14, a negative electrode tab B104 is arranged in the negative electrode tab groove B112a. A third insulation adhesive B122a (equivalent to the first insulation adhesive layer 121 in the first solution) is covered on the negative electrode tab groove B112a. The groove, for example, the fourth avoidance groove B114, is opposite to the negative electrode tab groove B122a. The first insulation adhesive B124a and the second insulation adhesive B124b are covered on the fourth avoidance groove B114. The third insulation adhesive can cover the negative electrode tab groove B112a. In this way, burrs of the negative electrode tab B104 can be effectively prevented from piercing the separator B107.

In addition, the third insulation adhesive 122a can effectively reduce the risk of lithium precipitation in the negative electrode tab groove B112a.

In addition, even if some burrs of the positive electrode sheet pierce the separator B107 and the third insulation adhesive 122a, because of existence of the negative electrode tab groove B112a, the burrs do not come into contact with the negative electrode active material, which can effectively avoid violent heat generation of the electrode core.

According to another embodiment of the present disclosure, a battery apparatus is provided. The battery apparatus includes the electrode core stated above. The battery apparatus may be, but is not limited to, a lithium-ion battery, a sodium-ion battery, a nickel metal hydride battery, a nickel cadmium battery, and the like. The battery apparatus may be a pouch battery or a cylindrical battery.

The battery apparatus includes a housing and an electrode core. The electrode core is arranged inside the housing. The battery apparatus has a characteristic of good safety performance.

According to still another embodiment of the present disclosure, an electronic device is provided. The electronic device includes the foregoing battery apparatus.

For example, the electronic device may be a vehicle, a mobile phone, an earphone, a stylus, a VR device, an AR device, or the like, which is not limited herein, and a person skilled in the art may make a selection according to actual needs.

The electronic device has a characteristic of a high safety factor.

### <Embodiment 3>

Referring to FIG. 16, in the example, a negative electrode tab B104 is arranged in one of the second avoidance grooves B112 (that is, a negative electrode tab groove B112a). A first insulation adhesive B124a and a second insulation adhesive B 124b are arranged on two second avoidance grooves B112. The first insulation adhesive B124a and the second insulation adhesive B124b are bonded to two fourth avoidance grooves B114 corresponding to a positive electrode sheet B11 and the negative electrode tab B104. The first insulation adhesive B124a and the second insulation adhesive B124b are arranged in an overlapping manner at the bottom portion in each groove B112, B 114 corresponding to the negative electrode tab B104.

The positive electrode tab B103 is arranged in one of the first avoidance grooves B111. The first insulation adhesive B124a and the second insulation adhesive B124b are arranged on the two first avoidance grooves B111. The first insulation adhesive B124a and the second insulation adhesive B124b are arranged in two third avoidance grooves B113 corresponding to a negative electrode sheet B12 and the positive electrode tab B103. The first insulation adhesive B124a and the second insulation adhesive B124b are arranged in an overlapping manner at the bottom portion in each groove B111, B113 corresponding to the positive electrode tab B103.

### <Embodiment 4>

Referring to FIG. 18, in the example, a negative electrode tab B104 is arranged in one of the second avoidance grooves B112 (that is, a negative electrode tab groove B112a). A first insulation adhesive B124a and a second insulation adhesive B 124b are arranged on two second avoidance grooves B112. The first insulation adhesive B124a and the second insulation adhesive B124b are bonded to two fourth avoidance grooves B114 corresponding to a positive electrode sheet B11 and the negative electrode tab B104. The first insulation adhesive B124a and the second insulation adhesive B124b form a gap at a bottom portion in each groove B112, B114 corresponding to the negative electrode tab B104.

The positive electrode tab B103 is arranged in one of the first avoidance grooves B111. The first insulation adhesive B124a and the second insulation adhesive B124b are arranged on the two first avoidance grooves B 111. The first insulation adhesive B124a and the second insulation adhesive B124b are arranged in two third avoidance grooves B113 corresponding to a negative electrode sheet B12 and the positive electrode tab B103. The first insulation adhesive B124a and the second insulation adhesive B 124b form a gap at the bottom portion in each groove B111, B113 corresponding to the negative electrode tab B104.

### <Embodiment 5>

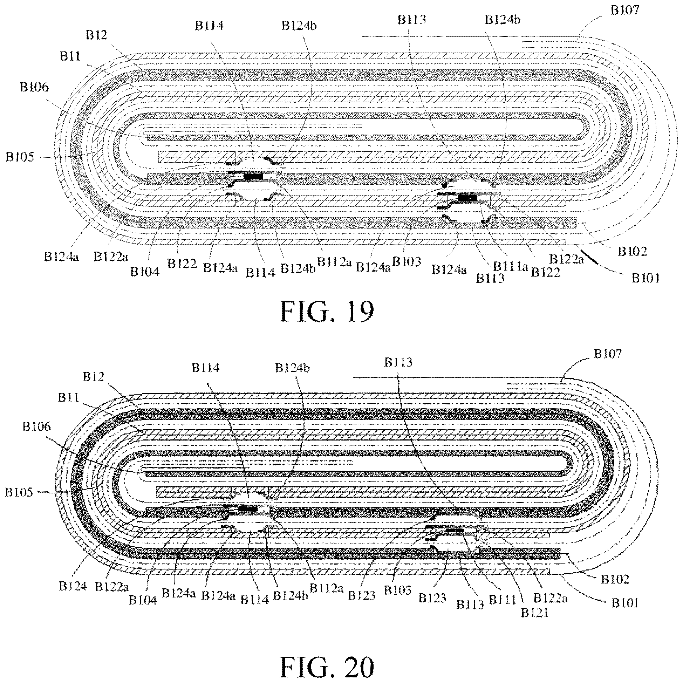

Referring to FIG. 19, in the example, a negative electrode tab B104 is arranged in one of the second avoidance grooves B112 (that is, a negative electrode tab groove B112a). A third insulation adhesive B122a (which is equivalent to the first insulation adhesive layer 121 in the first solution) and an adhesive tape (which is equivalent to the third insulation adhesive layer 123 in the first solution) are respectively arranged on the two second avoidance grooves B112. The first insulation adhesive B 124a and the second insulation adhesive B124b are bonded to two fourth avoidance grooves B114 corresponding to a positive electrode sheet and the negative electrode tab B104. The first insulation adhesive B124a and the second insulation adhesive B124b form a gap at a bottom portion.

The positive electrode tab B103 is arranged in one of the first avoidance grooves Bill. The third insulation adhesive B122a and the adhesive tape B122 (which is equivalent to the seventh insulation adhesive layer 127 in the first solution) are respectively arranged on the two first avoidance grooves Bill. The first insulation adhesive B124a and the second insulation adhesive B124b are arranged in two third avoidance grooves B 1 13 corresponding to a negative electrode sheet B12 and the positive electrode tab B103. The first insulation adhesive B124a and the second insulation adhesive B124b form a gap at a bottom portion.

### <Embodiment 6>

Referring to FIG. 20, in the example, a negative electrode tab B104 is arranged in one of the second avoidance grooves B112 (that is, a negative electrode tab groove B112a). The third insulation adhesive B112a and the adhesive tape B122 (which is equivalent to the third insulation adhesive layer 123 in the third first solution) are respectively arranged on the two second avoidance grooves B112. The first insulation adhesive B124a and the second insulation adhesive B124b are bonded to two fourth avoidance grooves B114 corresponding to a positive electrode sheet and the negative electrode tab B104. The first insulation adhesive B124a and the second insulation adhesive B124b form a gap at a bottom portion.

The positive electrode tab B103 is arranged in one of the first avoidance grooves B111 (that is, the positive electrode tab groove 111a). The third insulation adhesive B122a and the adhesive tape B121 (which is equivalent to the seventh insulation adhesive layer 127 in the first solution) are arranged on the two first avoidance grooves B 111. The adhesive tape B123 (which is equivalent to the eighth insulation adhesive layer 128 in the first solution) is arranged in two third avoidance grooves B113 corresponding to a negative electrode sheet B12 and the positive electrode tab B103.

The foregoing embodiments focus on describing differences between the embodiments. Different optimization features between the embodiments all can be combined to form a better embodiment provided that there is no contradiction therebetween. In consideration of the concise description, details are not described herein again.

Although some specific embodiments of the present disclosure have been described in detail by way of examples, a person skilled in the art should understand that the foregoing examples are only for description and are not intended to limit the scope of the present disclosure. A person skilled in the art should appreciate that modifications may be made to the foregoing embodiments without departing from the scope and spirit of the present disclosure. The scope of the present disclosure is limited by the appended claims.

## Claims

1. An electrode core, comprising:
a negative electrode sheet (12), comprising a negative electrode current collector (102) and a negative electrode active material (106) attached to the negative electrode current collector (102), a negative electrode tab groove (111) being provided on the negative electrode active material (106);
a negative electrode tab (104), arranged in the negative electrode tab groove (111); and
a positive electrode sheet (11), comprising a positive electrode current collector (101) and a positive electrode active material (105) attached to the positive electrode current collector (101), a first groove (112) being provided on the positive electrode active material (105), the first groove (112) being arranged opposite to the negative electrode tab groove (111), and a projection of the first groove (112) on the negative electrode sheet (12) being located in the negative electrode tab groove (111).

2. The electrode core according to claim 1, wherein the electrode core further comprises a separator (107), located between the positive electrode sheet (11) and the negative electrode sheet (12).

3. The electrode core according to claim 1 or 2, wherein
a second groove (113) is further provided on the negative electrode active material (106), the second groove (113) and the negative electrode tab groove (111) being symmetrically arranged on two sides of the negative electrode current collector (102); and
a third groove (114) is provided on the positive electrode active material (105), the third groove (114) being arranged opposite to the second groove (113), and a projection of the third groove (114) on the negative electrode sheet (12) is located in the second groove (113).

4. The electrode core according to claim 3, further comprising:
a first insulation adhesive layer (121), bonded to a bottom of the negative electrode tab groove (111) and extending to the negative electrode active material (106) on a side portion of the negative electrode tab groove (111), or bonded to an upper surface of the negative electrode tab (104) and extending to the negative electrode active material (106) on a side portion of the negative electrode tab groove (111);
a second insulation adhesive layer (122), bonded to a bottom of the first groove and extending to the positive electrode active material (105) on a side portion of the first groove;
a third insulation adhesive layer (123), bonded to a bottom of the second groove (113) and extending to the negative electrode active material (106) on a side portion of the second groove (113); and
a fourth insulation adhesive layer (124), bonded to a bottom of the third groove (114) and extending to the positive electrode active material (105) on a side portion of the third groove (114).

5. The electrode core according to claim 4, wherein the first groove is a through groove, comprising a first left wall and a first right wall, and the second insulation adhesive layer (122) comprises a second left insulation adhesive layer arranged on the first left wall and a second right insulation adhesive layer arranged on the first right wall;
the second left insulation adhesive layer and the second right insulation adhesive layer overlap at opposite positions at the bottom of the first groove; or the second left insulation adhesive layer and the second right insulation adhesive layer are spaced apart at opposite positions at the bottom of the first groove; and/or
the third groove (114) is a through groove, comprising a third left wall and a third right wall, and the fourth insulation adhesive layer (124) comprises a fourth left insulation adhesive layer arranged on the third left wall and a fourth right insulation adhesive layer arranged on the third right wall; and
the fourth left insulation adhesive layer and the fourth right insulation adhesive layer overlap at opposite positions at the bottom of the third groove (114); or the fourth left insulation adhesive layer and the fourth right insulation adhesive layer are spaced apart at opposite positions at the bottom of the third groove (114).

6. The electrode core according to any one of claims 1 to 5, further comprising a positive electrode tab (103), a positive electrode tab groove (115) being provided on the positive electrode active material (105), the positive electrode tab (103) being arranged in the positive electrode tab groove (115), a fourth groove (116) being provided on the negative electrode active material (106), the fourth groove (116) being arranged opposite to the positive electrode tab groove (115), and a projection of the positive electrode tab groove (115) on the negative electrode sheet being located in the fourth groove (116).

7. The electrode core according to claim 6, wherein
a fifth groove (117) is further provided on the positive electrode active material (105), the fifth groove (117) and the positive electrode tab groove (115) being symmetrically arranged on two sides of the positive electrode current collector (101); and
a sixth groove (118) is provided on the negative electrode active material (106), the sixth groove (118) being arranged opposite to the fifth groove (117), and a projection of the fifth groove (117) on the negative electrode sheet (12) is located in the sixth groove (118).

8. The electrode core according to claim 7, further comprising:
a fifth insulation adhesive layer (125), bonded to a bottom of the positive electrode tab groove (115) and extending to the positive electrode active material (105) on a side portion of the positive electrode tab groove (115), or bonded to an upper surface of the positive electrode tab (103) and extending to the positive electrode active material (105) on a side portion of the positive electrode tab groove (115);
a sixth insulation adhesive layer (126), bonded to a bottom of the fourth groove (116) and extending to the negative electrode active material (106) on a side portion of the fourth groove (116);
a seventh insulation adhesive layer (127), bonded to a bottom of the fifth groove (117) and extending to the positive electrode active material (105) on a side portion of the fifth groove (117); and
an eighth insulation adhesive layer (128), bonded to a bottom of the sixth groove (118) and extending to the negative electrode active material (106) on a side portion of the sixth groove (118).

9. The electrode core according to claim 8, wherein the fourth groove (116) is a through groove, comprising a fourth left wall and a fourth right wall, and the sixth insulation adhesive layer (126) comprises a sixth left insulation adhesive layer arranged on the fourth left wall and a sixth right insulation adhesive layer arranged on the fourth right wall;
the sixth left insulation adhesive layer and the sixth right insulation adhesive layer overlap at opposite positions at the bottom of the fourth groove (116); or the sixth left insulation adhesive layer and the sixth right insulation adhesive layer are spaced apart at opposite positions at the bottom of the fourth groove (116); and/or
the sixth groove (118) is a through groove, comprising a sixth left wall and a sixth right wall, and the eighth insulation adhesive layer (128) comprises an eighth left insulation adhesive layer arranged on the sixth left wall and an eighth right insulation adhesive layer arranged on the sixth right wall; and
the eighth left insulation adhesive layer and the eighth right insulation adhesive layer overlap at opposite positions at the bottom of the sixth groove (118); or the eighth left insulation adhesive layer and the eighth right insulation adhesive layer are spaced apart at opposite positions at the bottom of the sixth groove (118).

10. The electrode core according to any one of claims 3 to 9, wherein central axes of the negative electrode tab groove (111), the first groove (112), the second groove (113), and the third groove (114) are collinear.

11. The electrode core according to any one of claims 7 to 10, wherein central axes of the positive electrode tab groove (115), the fourth groove (116), the fifth groove (117), and the sixth groove (118) are collinear.

12. An electrode core, comprising:
a positive electrode sheet (11), comprising a positive electrode current collector (101) and a positive electrode active material (105) attached to the positive electrode current collector (101), a positive electrode tab groove (115) being provided on the positive electrode active material (105);
a positive electrode tab (103), arranged in the positive electrode tab groove (115); and
a negative electrode sheet (12), comprising a negative electrode current collector (102) and a negative electrode active material (106) attached to the negative electrode current collector (102), a fourth groove (116) being provided on the negative electrode active material (106), the fourth groove (116) being arranged opposite to the positive electrode tab groove (115), and a projection of the positive electrode tab groove (115) on the negative electrode sheet being located in the fourth groove (116).

13. The electrode core according to claim 12, wherein
a fifth groove (117) is further provided on the positive electrode active material (105), the fifth groove (117) and the positive electrode tab groove (115) being symmetrically arranged on two sides of the positive electrode current collector (101); and
a sixth groove (118) is provided on the negative electrode active material (106), the sixth groove (118) being arranged opposite to the fifth groove (117), and a projection of the fifth groove (117) on the negative electrode sheet (12) is located in the sixth groove (118).

14. The electrode core according to claim 13, further comprising:
a fifth insulation adhesive layer (125), bonded to a bottom of the positive electrode tab groove (115) and extending to the positive electrode active material (105) on a side portion of the positive electrode tab groove (115), or bonded to an upper surface of the positive electrode tab (103) and extending to the positive electrode active material (105) on a side portion of the positive electrode tab groove (115);
a sixth insulation adhesive layer (126), bonded to a bottom of the fourth groove (116) and extending to the negative electrode active material (106) on a side portion of the fourth groove (116);
a seventh insulation adhesive layer (127), bonded to a bottom of the fifth groove (117) and extending to the positive electrode active material (105) on a side portion of the fifth groove (117); and
an eighth insulation adhesive layer (128), bonded to a bottom of the sixth groove (118) and extending to the negative electrode active material (106) on a side portion of the sixth groove (118).

15. The electrode core according to claim 14, wherein the fourth groove (116) is a through groove, comprising a fourth left wall and a fourth right wall, and the sixth insulation adhesive layer (126) comprises a sixth left insulation adhesive layer arranged on the fourth left wall and a sixth right insulation adhesive layer arranged on the fourth right wall;
the sixth left insulation adhesive layer and the sixth right insulation adhesive layer overlap at opposite positions at the bottom of the fourth groove (116); or the sixth left insulation adhesive layer and the sixth right insulation adhesive layer are spaced apart at opposite positions at the bottom of the fourth groove (116); and/or
the sixth groove (118) is a through groove, comprising a sixth left wall and a sixth right wall, and the eighth insulation adhesive layer (128) comprises an eighth left insulation adhesive layer arranged on the sixth left wall and an eighth right insulation adhesive layer arranged on the sixth right wall; and
the eighth left insulation adhesive layer and the eighth right insulation adhesive layer overlap at opposite positions at the bottom of the sixth groove (118); or the eighth left insulation adhesive layer and the eighth right insulation adhesive layer are spaced apart at opposite positions at the bottom of the sixth groove (118).

16. A battery apparatus, comprising the electrode core according to any one of claims 1 to 15.

17. The battery apparatus according to claim 16, further comprising a housing, the electrode core being accommodated inside the housing.

18. An electronic device, comprising the battery apparatus according to claim 16.
